Europäisches Patentamt

(19) European Patent Office

Office européen des brevets

(11) **EP 1 111 395 B1**

(12) **EUROPÄISCHE PATENTSCHRIFT**

(45) Veröffentlichungstag und Bekanntmachung des Hinweises auf die Patenterteilung:
**04.06.2003  Patentblatt 2003/23**

(51) Int Cl.⁷: **G01P 15/12**, G01P 15/08, G01C 19/00

(21) Anmeldenummer: **99125814.6**

(22) Anmeldetag: **23.12.1999**

(54) **Sensor zur Erfassung einer Drehbewegung oder einer Drehbeschleunigung**

Sensor for detection of angular movement or angular acceleration

Capteur pour la détection d'un mouvement ou d'une accélération angulaire

(84) Benannte Vertragsstaaten:
**AT BE CH CY DE DK ES FI FR GB GR IE IT LI LU MC NL PT SE**

(30) Priorität: **20.12.1999  DE 19961454**

(43) Veröffentlichungstag der Anmeldung:
**27.06.2001  Patentblatt 2001/26**

(73) Patentinhaber: **Plöchinger, Heinz**
**4785 Freinberg (AT)**

(72) Erfinder: **Plöchinger, Heinz**
**4785 Freinberg (AT)**

(74) Vertreter: **Schoppe, Fritz, Dipl.-Ing.**
**Schoppe, Zimmermann, Stöckeler & Zinkler**
**Patentanwälte**
**Postfach 71 08 67**
**81458 München (DE)**

(56) Entgegenhaltungen:
WO-A-93/20406          WO-A-97/49998
WO-A-99/46559          US-A- 4 232 553

• "SENSOR OF THE YAW ACCELERATION RATE" RESEARCH DISCLOSURE,GB,INDUSTRIAL OPPORTUNITIES LTD. HAVANT, Nr. 344, 1. Dezember 1992 (1992-12-01), Seite 922 XP000327137 ISSN: 0374-4353

**Beschreibung**

Die vorliegende Erfindung bezieht sich auf einen Sensor zum Erfassen einer Drehbewegung oder einer Drehbeschleunigung und insbesondere auf einen Sensor zum Erfassen einer Drehbewegung oder einer Drehbeschleunigung mit einem Heizelement und einem Sensorelement.

Die DE 42 43 978 C1 beschreibt einen Neigungs- und Beschleunigungs-Sensor, der in einem geschlossenen, fluidgefüllten Gehäuse eine Sensorstruktur mit mindestens zwei temperaturabhängigen elektrischen Widerständen umfaßt, wobei mindestens einer der Widerstände beheizt ist. Die konvektive Strömung, die sich in einem Schwere- oder Trägheitsfeld im Fluid innerhalb des Gehäuses einstellt, wird ausgewertet und die Signale, die durch den Sensor erfaßt werden, stehen in direktem Bezug zum Neigungswinkel bzw. zur Beschleunigung des Sensorsystems.

Die EP 95 300 345.6 beschreibt einen Sensor, der mindestens eine temperaturerfassende Widerstandseinrichtung aufweist, die innerhalb eines geschlossenen Raums angeordnet ist. Ein Gas, das sich in dem geschlossenen Raum befindet, wird geheizt, und wenn eine Beschleunigung auf den Sensor wirkt, ändert sich aufgrund des Flusses des erwärmten Gases über die Widerstandseinrichtung der Widerstand der Widerstandseinrichtung. Der Sensor weist einen Halbleiter oder ein isolierendes Substrat mit einem Hohlraum darin und eine vorstehende Einrichtung eines isolierenden Materials auf, die sich in dem Raum zumindest teilweise quer zu dem Hohlraum erstreckt, wobei die Widerstandseinrichtung einstückig an der vorstehenden Einrichtung gebildet ist.

Die US-A-4,361,054 beschreibt eine Anordnung von Hitzdrahtluftgeschwindigkeitsmessern, die teilweise in eine Rotorgrenzschicht eingebaut sind, so daß dieselben zwei Widerstände einer Wheatstone-Brückenschaltung für jede Achse bilden. Die Hitzdrahtwiderstände ändern ihren Widerstandswert gemäß dem Winkelversatz des Gyrorotors bezüglich Null. Die Kombination der Widerstandsänderungen wird dann in der Brückenschaltung verwendet, um ein elektrisches Signal zu liefern, das direkt proportional zu einem Gyrorotorwinkelversatz ist.

Die US-A-4,020,700 beschreibt einen Drehratensensor, der einen von einer Pumpe erzeugten Fluidstrom mit Hitzdrahtsonden abtastet. Die Düse des Drehratensensors, die ein Fluid hin zu einem Paar von temperaturabhängigen Erfassungswiderstandselementen richtet, ist in einem Hauptblock gebildet, der eine Kammer, in der die Erfassungselemente ebenfalls angebracht sind, definiert, wodurch Probleme des Ausrichtens des Strahls bezüglich der Kammer und des Ausrichtens der Erfassungselemente bezüglich der Düse vermindert werden.

Die US-A-5,780,738 beschreibt eine Vorrichtung zum Erfassen einer Drehbewegungsrate, die einen Körper umfaßt, der eine Oberfläche mit einem vorstehenden Abschnitt und eine Öffnung durch die Oberfläche, die sich in der Nähe des vorstehenden Abschnitts befindet und durch die ein Fluidstrom entlang einer anfänglichen Stromachse gerichtet ist, definiert. Der vorstehende Abschnitt richtet den Fluidstrom in einen Weg entlang der Oberfläche gemäß dem Coanda-Effekt. Ein erster Flußsensor ist relativ zu dem Körper und in der Nähe zu dem Weg des Fluidstroms entlang der Oberfläche des Körpers befestigt. Der erste Flußsensor erzeugt eine erste Anzeige einer Flußrate eines ersten Abschnittes des Fluidstroms in der Nähe desselben. Ein zweiter Flußsensor ist relativ zu dem Körper und in der Nähe des Weges des Fluidstroms entlang der Oberfläche des Körpers befestigt. Der zweite Flußsensor erzeugt eine zweite Anzeige einer Flußrate eines zweiten Abschnitts des Fluidstroms in der Nähe desselben. Die Drehbewegung des Körpers wird abhängig von der ersten Anzeige und der zweiten Anzeige erfaßt.

Die EP 0 328 247 B1 beschreibt einen Winkelgeschwindigkeitsaufnehmer, der ein Ausgangssignal beim Vorliegen einer Differenz zwischen den Ausgangssignalen eines Paares von Wärmefühlern dann erzeugt, wenn der aus einer Gasdüse austretende Gasstrom wegen des Einflusses einer dem Gasstrom erteilten Bewegung mit zu bestimmender aufgeprägter Winkelgeschwindigkeit einen der Wärmefühler mehr bestreicht als den anderen.

Die EP 0 786 645 A2 beschreibt einen Sensor zum Erfassen einer Drehrate oder einer Drehbeschleunigung mit Hilfe einer kapazitiven Auswertung von 2 bis 4 bewegten bzw. vibrierenden Masse-Paddeln, der in Mikrosystemtechnik ausgeführt ist. Der Sensor zum Erfassen der Drehrate oder der Drehbeschleunigung weist einen Vibrator mit mindestens zwei vibrierenden Massen und Balken zum Tragen der Massen auf. Der Vibrator wird unter Verwendung eines Einkristallsiliziumsubstrats der (110)-Kristallebene gebildet, und die zwei Balken verwenden zwei Arten von (111)-Kristallebenen, die senkrecht zu dem Siliziumsubstrat und nicht parallel zueinander sind, als Hauptebenen, und die zwei Balken besitzen eine Flexibilität in einer Richtung, die parallel zu dem Siliziumsubstrat und vertikal zu jeder der (111)-Kristallebenen ist. Kapazitätsänderungen zwischen den Massen und einer Gruppe von Elektroden werden erfaßt.

Es sind weiter Drehratensensoren bekannt, bei denen die kapazitive Änderung bewegter Massen zu einer festen Masse ausgewertet wird, um die Drehrate zu bestimmen.

Ein Nachteil bekannter Verfahren und Sensoren zum Erfassen einer Drehbewegung oder einer Drehbeschleunigung besteht darin, daß dieselben beispielsweise bewegte Massen verwenden, die eine empfindliche Aufhängung benötigen.

Ein weiterer Nachteil bekannter Verfahren und Sensoren zum Erfassen einer Drehbewegung oder einer Drehbeschleunigung besteht darin, daß für die Sensoren ein komplizierter Aufbau, der mit einem hohen Aufwand bzw. hohen Kosten verbunden ist, erforderlich ist.

Ein weiterer Nachteil bekannter Verfahren und Sensoren zum Erfassen einer Drehbewegung oder einer Drehbeschleunigung besteht darin, daß z. B. bei Sensoren zum Erfassen eines Fluidflusses Vorrichtungen zum Erzeugen eines Fluidstroms, wie z. B. eine Pumpe, notwendig sind, um den Fluidfluß zu messen.

Die Aufgabe der vorliegenden Erfindung besteht darin, einen Sensor zum Erfassen einer Drehbewegung oder einer Drehbeschleunigung zu schaffen, der einen einfachen und robusten Aufbau besitzt.

Diese Aufgabe wird durch einen Sensor zum Erfassen einer Drehbewegung oder einer Drehbeschleunigung gemäß Anspruch 1 gelöst.

Der Erfindung liegt die Erkenntnis zugrunde, daß die Trägheit eines lokal erwärmten Fluids genutzt werden kann, um eine Drehbewegung oder eine Drehbeschleunigung zu erfassen. Dabei wird das Fluid in einem lokalen Bereich durch ein Heizelement auf eine bestimmte Temperatur erwärmt und durch eine Drehbewegung werden der lokal erwärmte Bereich und das Heizelement relativ zueinander bewegt, so daß sich der lokal erwärmte Bereich des Fluids z. B. zu einem zu dem Heizelement benachbarten Sensorelement bewegt, das dadurch eine Temperaturänderung des Fluids und somit eine Bewegung erfaßt. Zur Erfassung einer Drehbewegung oder Drehbeschleunigung liegen das Heizelement und das Sensorelement vorzugsweise auf einem gemeinsamen Kreis um die Drehachse der Drehbewegung oder der Drehbeschleunigung herum.

Ein Vorteil des Sensors der vorliegenden Erfindung besteht darin, daß derselbe robust, überlastsicher und in jeder Lage funktionsfähig ist und keine bewegbaren Masseelemente besitzt.

Ein weiterer Vorteil des Sensors der vorliegenden Erfindung besteht darin, daß derselbe selbsttestfähig ist.

Ein weiterer Vorteil des Sensors der vorliegenden Erfindung besteht darin, daß derselbe für moderne Massenfertigungsverfahren, z. B. der Mikrosystemtechnik und Halbleiterlinien, geeignet ist und kostengünstig herstellbar ist.

Bevorzugte Ausführungsbeispiele der vorliegenden Erfindung werden nachfolgend unter Bezugnahme auf die beigefügten Zeichnungen näher erläutert. Es zeigen:

Fig. 1          ein erstes Ausführungsbeispiel eines Sensors gemäß der Erfindung;

Fig. 2          eine alternative Anordnung des Sensors nach Fig. 1;

Fig. 3          eine schematische Darstellung eines alternativen Heizelements für den Sensor in Fig. 1;

Fig. 4          eine schematische Darstellung einer Ersatzschaltung für ein Heizelement nach Fig. 2;

Fig. 5          ein zweites Ausführungsbeispiel eines Sensors gemäß der Erfindung mit zwei Heizelementen nach Fig. 2;

Fig. 6          ein drittes Ausführungsbeispiel eines Sensors gemäß der Erfindung;

Fig. 7          ein viertes Ausführungsbeispiel eines Sensors gemäß der Erfindung;

Fig. 8          eine schematische Darstellung einer Realisierung des vierten Ausführungsbespiels von Fig. 7;

Fig. 9          eine schematische Darstellung einer alternativen Realisierung des vierten Ausführungsbeispiels von Fig. 7;

Fig. 10         eine schematische Schnittdarstellung einer Anordnung der Heizelemente von Fig. 5;

Fig. 11         eine schematische Darstellung der Konvektionswalze der Heizelemente von Fig. 10;

Fig. 12         eine schematische Schnittdarstellung einer alternativen Anordnung des Heizelements von Fig. 5;

Fig. 13 A und B     eine Draufsicht und eine Schnittansicht entlang der Linie I-I' eines fünften Ausführungsbeispiels eines Sensors gemäß der Erfindung; und

Fig. 14         ein sechstes Ausführungsbeispiel eines Sensors gemäß der Erfindung.

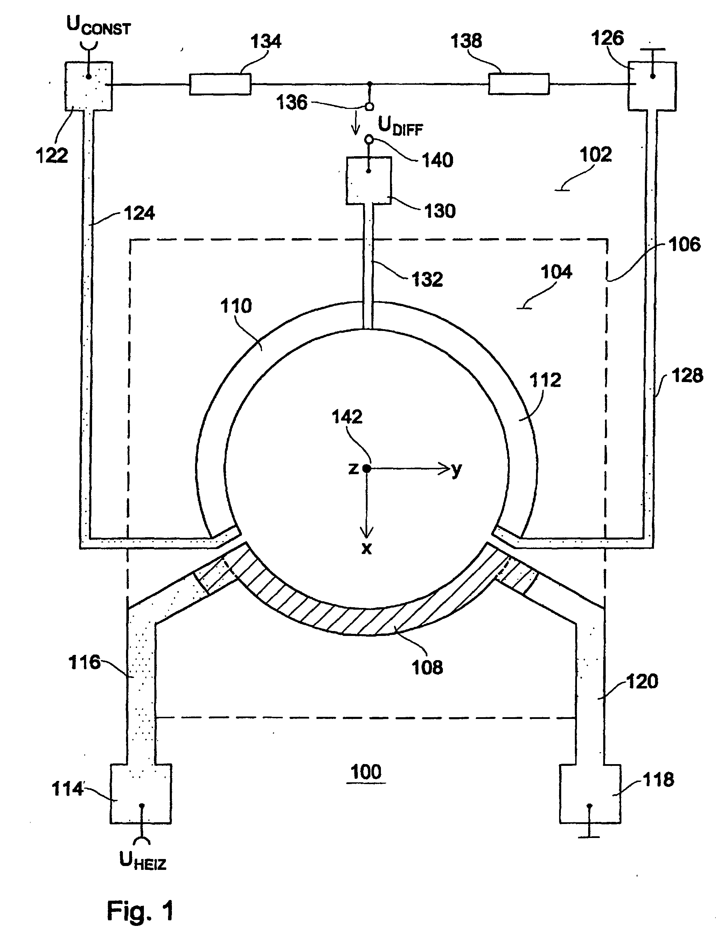

Fig. 1 zeigt ein erstes Ausführungsbeispiel eines Sensors gemäß der Erfindung. Ein Sensor 100 befindet sich in einem abgeschlossenen, fluidgefüllten Gehäuse oder in einer Kapsel. Der Sensor 100 weist ein Substrat mit einem äußeren Substratbereich 102, der beispielsweise aus Silizium bestehen kann, und einem inneren Substratbereich 104 auf, der vorzugsweise eine geschlossene Membran bzw. eine geschlossene dünne Membran ist. Die Grenze zwischen dem äußeren Substratbereich 102 und dem inneren Substratbereich 104 ist durch eine Grenzlinie 106 gezeigt. In dem inneren Substratbereich 104, z. B. auf der Membran, ist ein Heizelement 108, das vorzugsweise kreisförmig bzw. kreisbogenförmig ist und alternativ polygonförmig sein kann und vorzugsweise die Form einer Leiterbahn aufweist, vorgesehen. Das Heizelement 108 besteht vorzugsweise aus NiCrNi und kann alternativ aus Polysilizium, Pt, Alu oder Ni bestehen. Besteht das Heizelement 108 aus einem Material mit einem Temperaturkoeffizienten TK annähernd Null (z.B. NiCrNi), nimmt es bei Anlegen einer Konstantspannung konstante Leistung auf. Dies führt zu einer annähernd konstanten Temperatur-Erhöhung gegenüber Substratbereich 102. Bei anderen Materialien mit definiertem TK läßt sich über den Eigenwiderstand die Temperatur des Heizelementes 108 ermitteln und ggf. nachregeln. In dem inneren Substratbereich 104 sind ferner ein erstes Sensorelement 110 und ein zweites Sensorelement 112 vorgesehen, die vorzugsweise viertelkreisförmige Leiterbahnen sind, die beispielsweise aus Ni und alternativ aus Pt oder Polysilizium bestehen. Das erste und das zweite Sensorelement 110, 112 liegen vorzugsweise auf einem Kreis mit dem Heizelement 108.

Der Sensor 100 weist ferner eine erste Kontaktfläche 114, die mit einer ersten Leiterbahn 116 mit einem ersten Ende des Heizelements 108 verbunden ist, und eine zweite Kontaktfläche 118, die mit einer zweiten Leiterbahn 120 mit einem zweiten Ende des Heizelements 108 verbunden ist, auf. Die erste Kontaktfläche 114, die erste Leiterbahn 116, die zweite Kontaktfläche 118 und die zweite Leiterbahn 120, bestehen vorzugsweise aus einem Metall, wie z. B. Kupfer, Silber, Gold, etc. Zwischen der ersten Kontaktfläche 114 und der zweiten Kontaktfläche 118 ist eine Heizspannung $U_{Heiz}$ über den thermischen Widerstand des Heizelements 108 angelegt.

Der Sensor 100 weist außerdem eine dritte Kontaktfläche 122, die mit einer dritten Leiterbahn 124 verbunden ist, die mit einem ersten Ende des ersten Sensorelements 110 verbunden ist, und eine vierte Kontaktfläche 126, die mit einer vierten Leiterbahn 128 verbunden ist, die mit einem ersten Ende 126 des zweiten Sensorelements 112 verbunden ist, auf. Die dritte Kontaktfläche 122, die dritte Leiterbahn 124, die vierte Kontaktfläche 126 und die vierte Leiterbahn 128 bestehen vorzugsweise aus einem Metall, wie z. B. Kupfer, Aluminium, Gold, Silber etc. Eine fünfte Kontaktfläche 130 ist mit einer fünften Leiterbahn 132 verbunden, die sich zu einer Verbindungsstelle zwischen einem zweiten Ende des ersten Sensorelements 110 bzw. des zweiten Sensorelements 112 erstreckt und dieselben verbindet bzw. kontaktiert. Es ist ferner ein erster Widerstand 134, zwischen der dritten Kontaktfläche 122 und einem ersten Meßanschluß 136 zum Messen einer Differenzspannung $U_{Diff}$, und ein zweiter Widerstand 138 zwischen dem ersten Meßanschluß 136 und der vierten Kontaktfläche 126, der betragsmäßig gleich dem ersten Widerstand 134 ist, vorgesehen. Ein zweiter Meßanschluß 140 ist weiterhin an der fünften Kontaktfläche 130 vorgesehen, um zwischen dem ersten und dem zweiten Meßanschluß 136, 140 die Differenzspannung $U_{Diff}$ messen zu können. Zwischen der dritten Kontaktfläche 122 und der vierten Kontaktfläche 126 ist eine konstante Spannung $U_{const}$ angelegt.

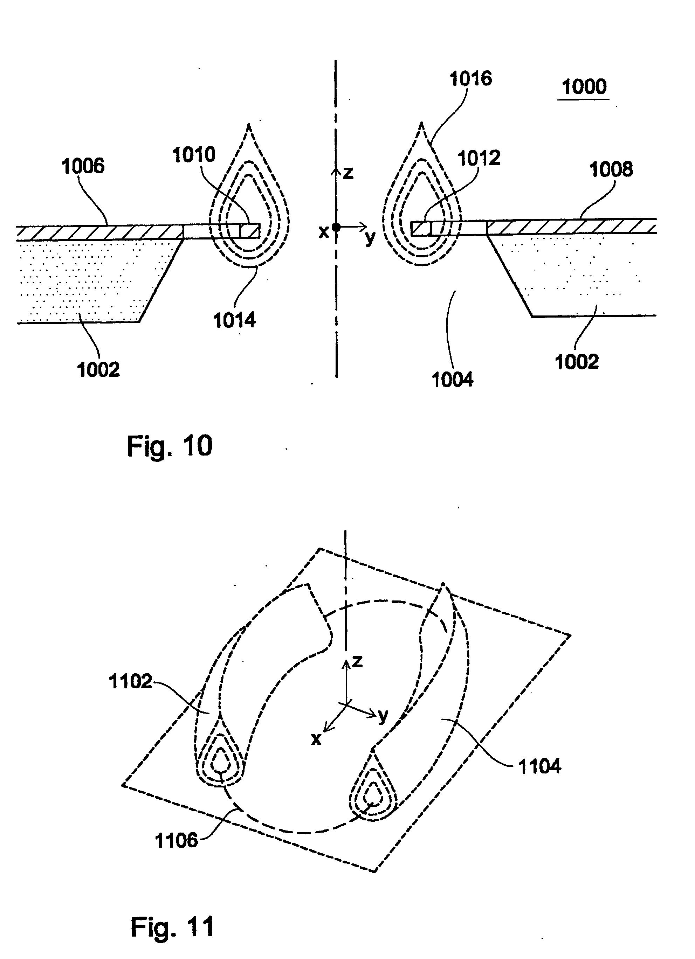

Wie erwähnt, befindet sich der Sensor 100 in einem abgeschlossenen fluidgefüllten Gehäuse, wobei das Fluid mindestens das Heizelement 108 und die Sensorelemente 110 und 112 geschlossen umgibt. Das Heizelement 108 wärmt um sich herum das Fluid, wodurch ein Konvektionsströmungsbereich, durch den ein Isothermenfeld festgelegt wird, erzeugt wird. Wird der Sensor um eine Drehachse bzw. Z-Achse des Koordinatensystems 142 gedreht oder wird das Fluid gedreht, oder wird die Ebene in der der Sensor liegt gekippt, z. B. um die Y-Achse herum, so bewegt sich das Heizelement, z. B. durch eine Trägheit des Fluids bedingt, relativ von dem durch dasselbe erzeugte Isothermenfeld in dem Fluid, um z. B. weitere Isothermenfelder in benachbarten Bereichen zu erzeugen. Bei einer Drehung um die Z-Achse werden dabei sogenannte kreissegmentförmige Konvektionswalzen erzeugt (Fig. 11). Bewegt sich nun durch z. B. eine Drehung um die Z-Achse ein Sensorelement 110, 112 in den Bereich einer Konvektionswalze oder in ein Isothermenfeld, so ändert sich, wenn z. B. ein thermischer Widerstand als Sensorelement verwendet wird, der Widerstand des Sensorelements, wodurch die Drehbewegung oder die Drehbeschleunigung des Sensors 100 erfaßt werden kann. Sind zwei Sensorelemente 110, 112, wie in Fig. 1, auf einer ersten und einer zweiten Seite des Heizelements vorgesehen, so ist die Drehrichtung durch eine Widerstandsänderung des einen oder des anderen Sensorelements bestimmbar. Bei einer Neigung des Sensors um die Y-Achse oder bei einer Neigung des Sensors um die Y-Achse und gleichzeitiger Drehung um die Z-Achse bewegt sich die Wärme des Isothermenfelds, z. B. durch Aufsteigen, zu einem oder beiden Sensorelementen 110, 112, da die Sensorelemente 110, 112 aus der Ebene der Fig. 1 um die Y-Achse herum auf den Betrachter zu hinausgedreht werden und das Heizelement 108 nach innen geneigt wird. Hier ist sowohl die Neigung um die Y-achse als auch eine gleichzeitige Drehung um die Z-Achse durch eine gleiche oder unterschiedliche Widerstandsänderung der Sensorelemente 110, 112 bestimmbar.

Durch Anlegen einer Heizspannung $U_{Heiz}$ zwischen die erste Kontaktfläche 114 und die zweite Kontaktfläche 118 wird das Heizelement 108 über die Leiterbahn 114, 116 mit Strom versorgt, um dieses zu heizen. Durch das Heizen entsteht um das Heizelement 108 ein erwärmter Bereich bzw. ein Konvektionsbereich, der das Isothermenfeld festlegt. Die Absoluttemperatur des Heizelements 108 wird durch die angelegte Spannung eingestellt. Bei metallischen Heizelementen, wie z. B. aus Aluminium, Pt, Ni, ist der Widerstandswert des Heizelements in erster Näherung linear abhängig von der Temperatur, so daß die Temperatur über den Widerstandswert des Heizelements abgelesen werden kann, der zwischen der ersten Kontaktfläche 110 und der zweiten Kontaktfläche 118 gemessen werden kann. Dies gilt auch für Heizelemente aus Polysilizium.

Die Sensorelemente 110 und 112 sind über die dritte Leiterbahn 124, die fünfte Leiterbahn 132 in einem Abschnitt zwischen dem zweiten Ende des ersten Sensorelements 110 und dem zweiten Ende des zweiten Sensorelements 112, und die vierte Leiterbahn 128 in Reihe geschaltet. Über diese Reihenschaltung ist eine konstante Spannung $U_{const}$ zwischen der dritten Kontaktfläche 122 und der vierten Kontaktfläche 126 anlegbar. Bei gleicher Temperatur der Sensorelemente 110, 112 handelt es sich bei der Reihenschaltung um einen symmetrischen Spannungsteiler. Zu diesem Spannungsteiler ist zwischen den Kontaktflächen 122, 126 ein dauerhaft symmetrischer Spannungsteiler aus zwei gleich großen Widerständen 134, 138 parallel geschaltet, der in einer ersten Schleife, die aus der dritten Leiterbahn 124, dem ersten Sensorelement 110, dem ersten und zweiten Meßanschluß 136, 140 und der fünften Leiterbahn 132 besteht, und in einer dazu symmetrischen zweiten Schleife, die aus der vierten Leiterbahn 128, dem zweiten Sensorelement 112, der fünften Leiterbahn 132, dem ersten und dem zweiten Meßanschluß 136, 140 besteht, jeweils die Hälfte der konstanten Spannung $U_{const}$ eingeprägt.

Wird nun das erste Sensorelement 110 in den durch das Reizelement 108 erwärmten Bereich, vorzugsweise eine Konvektionswalze, bewegt, so ändert sich dessen Widerstand, nimmt bei metallisierten Sensorelementen zu, und die Differenzspannung $U_{Diff}$ zwischen dem ersten Meßanschluß 136 und dem zweiten Meßanschluß 140 wird positiv. Dies zeigt eine Linksdrehung des Sensors 100 um die Drehachse bzw. um die Z-Achse an. Wird aber das zweite Sensorelement 112 in die Konvektionswalze des Heizelements 108 bewegt, so nimmt dessen widerstand zu und die Differenzspannung $U_{Diff}$ wird negativ. Dies zeigt eine Rechtsdrehung des Sensors an.

Eine Neigung oder Drehung des Senors 100 um die Y-Achse kann dadurch bestimmt werden, daß der Widerstandswert von beiden Sensorelementen 110 und 112 zwischen der dritten Kontaktfläche 122 und der fünften Kontaktfläche 130 bzw. zwischen der vierten Kontaktfläche 126 und der fünften Kontaktfläche 130 gleich zunimmt oder gleich abnimmt, je nach dem, ob die Sensorelemente aus der Y-Ebene der Fig. 1 hinausgedreht oder hineingedreht werden.

Eine Neigung des Sensors 100 um die Y-Achse bei gleichzeitiger Drehung um die Z-Achse ist aus der Überlagerung der oben genannten Effekte für die Drehung um die Z-Achse und der Neigung um die Y-Achse bestimmbar, wobei die Neigung um die Y-Achse eine gleiche Veränderung der Widerstände der Sensorelemente 110 und 112, einen Offset, bewirkt, und die Drehung um die Z-Achse mit einem Differenzanteil der Widerstände der Sensorelemente 110 und 112 zur Widerstandsänderung beiträgt.

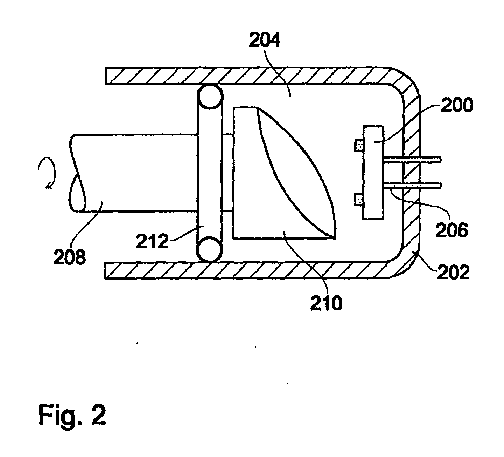

Mit der Struktur von Fig. 1 können Drehbewegungen und Drehbeschleunigungen und auch Neigungen um eine Achse mit gleichzeitiger Drehung um eine andere Achse und damit auch Querbeschleunigungen gemessen werden. Dabei kann sowohl der Sensor selbst gedreht werden, so daß die Trägheit des Fluids und die Drehung der Sensorelemente 110, 112 zu einem Meßeffekt führen, oder der Sensor 100 kann befestigt sein bzw. feststehend sein und das Fluid wird z. B. durch eine Antriebswelle, einen Propeller etc. in eine drehende Bewegung gebracht, wie es in Fig. 2 gezeigt ist.

Fig. 2 zeigt eine Anordnung eines Sensors 200 nach Fig. 1 in einem Gehäuse 202, das ein Fluid 204 enthält. Der Sensor 200 ist auf einem Träger 206 befestigt. Über dem Sensor 200 dreht sich eine Welle 208, an der z. B. ein Propeller, ein Stössel 210 etc. befestigt sein kann. Die Welle dreht sich um ihre Achse und bewirkt eine Drehbewegung oder Drehbeschleunigung des Fluids 204, die durch den Sensor 200 gemessen werden kann. Um die Welle 208 zu lagern und um zu verhindern, daß das Fluid 204 aus dem Gehäuseabschnitt, in dem sich der Sensor 200 befindet, austritt, ist eine Lager- und Abdichtungs-Struktur 212 um die Welle 208 vorgesehen, die die Welle gegenüber dem Gehäuse 202 abdichtet.

Zurückkehrend zu Fig. 1 kann die Temperatur des Heizelements 108 lediglich absolut eingestellt werden, d. h. es ist nicht erfaßbar, wie stark sich die Umgebung des Heizelements 108 bei einer Messung der Drehbewegung oder der Drehbeschleunigung mit der Zeit erwärmt, und ob der Temperaturunterschied des Heizelements 108 zu der Umgebung, dem Fluid, noch ausreichend groß ist, um eine gute Empfindlichkeit des Sensors 100 zu ermöglichen. Dies kann z. B. verbessert werden, indem als Heizelement 108 eine Reihe von Thermoelementen verwendet wird.

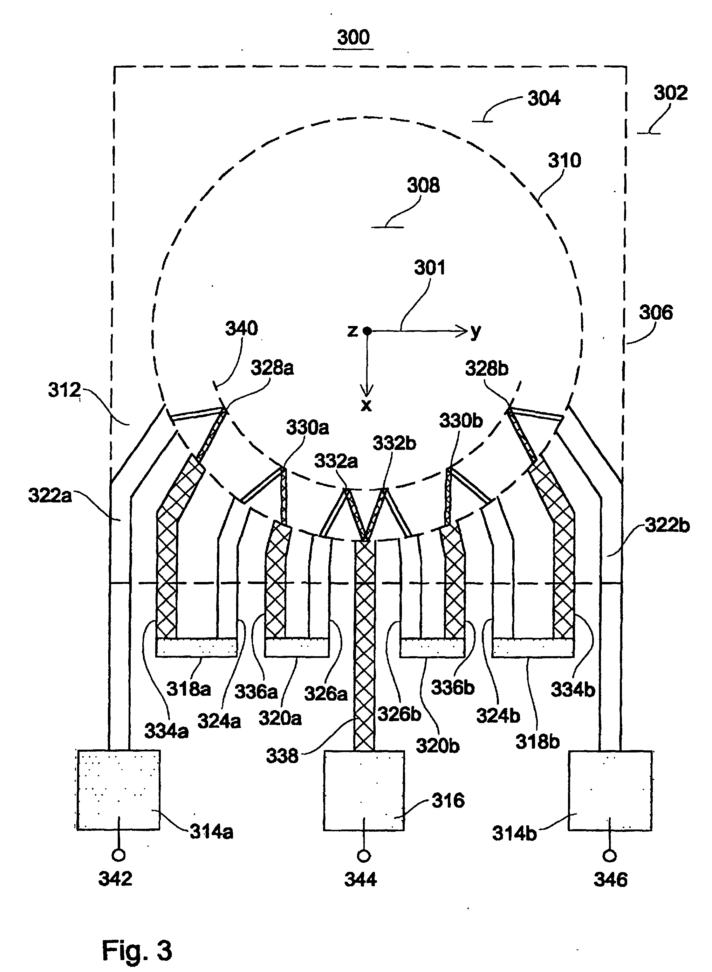

Fig. 3 zeigt eine schematische Darstellung eines alternativen Heizelements für den Sensor von Fig. 1. Das Heizelement 108 von Fig. 1 wird darin durch zwei Reihenschaltungen von Thermoelementen ersetzt. Ein Sensor 300 weist einen ersten Substratbereich 302, einen zweiten Substratbereich 304, deren Grenze durch eine Grenzlinie 306 angedeutet ist, und einen dritten Substratbereich 308, dessen Grenze zu dem zweiten Substratbereich 304 durch eine Grenzlinie 310 angedeutet ist, auf. Der erste und der zweite Substratbereich 302, 304 bestehen vorzugsweise aus einem Silizium-Substrat, und der dritte Substratbereich 308 ist vorzugsweise eine kreisförmige Öffnung in dem zweiten Substratbereich 304 oder eine kreisförmige Membran, wie z. B. eine dünne Membran, die über der Öffnung in dem zweiten Substratbereich 304 angeordnet ist.

Auf dem ersten Substratbereich 302 und dem zweiten Substratbereich 304 sind Kontakt- und Leiter-Strukturen für ein Heizelement 312 vorgesehen. Diese Kontakt- und Leiter-Strukturen sind mit Thermoelementen verbunden. Eine erste Kontakt- und Leiter-Struktur ist in einem Bereich links der X-Achse des Koordinatensystems 301 vorgesehen und weist eine erste Kontaktfläche 314a, eine zweite Kontaktfläche 316 und eine dritte und vierte Kontaktfläche 318a, 320a auf. Die Kontaktflächen bestehen vorzugsweise aus einer gut leitfähigen Kontaktschicht, wie z. B. aus Gold, Silber, Kupfer, etc. Eine erste Leiterbahn 322a, eine zweite Leiterbahn 324a, eine dritte Leiterbahn 326a sind jeweils mit einem ersten Ende mit einem ersten Arm eines jeweiligen Thermoelements 328a, 330a, 332a verbunden, der jeweils aus dem gleichen Material wie die jeweilige Leiterbahn besteht. Die Leiterbahnen 322a, 324a, 326a und die ersten Arme bestehen aus einem ersten Material, das z. B. Ni, Pt, W, Cu, Fe, NiCr, Si und CuNi sein kann. Die erste, zweite und dritte Leiterbahn 322a, 324a, 326a sind mit ihrem jeweiligen zweiten Ende mit der jeweiligen Kontaktfläche 314a, 318a, 320a verbunden. Eine vierte Leiterbahn 334a, eine fünfte Leiterbahn 336a und eine sechste Leiterbahn 338 sind jeweils mit einem ersten Ende mit einem zweiten Arm der jeweiligen Thermoelemente 328a, 330a, 332a verbunden, der jeweils aus dem gleichen Material wie die jeweiligen Leiterbahn besteht. Die Leiterbahnen 334a, 336a, 338 und die zweiten Arme der Thermoelemente 328a, 330a, 332a bestehen aus einem zweiten Material, das sich von dem ersten Material der Leiterbahnen 322a, 324a, 326a unterscheidet und beispielsweise Ni, Pt, W, Cu, Fe, NiCr, Si, CuNi sein kann. Die Leiterbahnen 334a, 336a, 338 sind mit ihrem jeweiligen zweiten Ende mit der jeweiligen Kontaktfläche 318a, 320a und 316 verbunden. Durch die Leiterbahnen 322a, 334a, 324a, 336a, 326a und 338 und die Kontaktflächen 314a, 318a, 320a und 316 werden die Thermoelemente 328a, 330a, 332a in Reihe geschaltet, um eine erste Reihenschaltung von Thermoelementen zu bilden.

Spiegelsymmetrisch zu der X-Achse des Koordinatensystems 301 ist rechts von der X-Achse eine zweite Kontakt- und Leiter-Struktur mit Thermoelementen vorgesehen. Kontaktflächen 314b 318b und 320b dieser zweiten Kontakt- und Leiterstruktur entsprechen den Kontaktflächen 314a, 318a und 320a der bereits beschriebenen ersten Kontakt- und Leiter-Struktur, und Leiterbahnen 322b, 324b, 326b, 334b und 336b entsprechen den Leiterbahnen 322a, 324a, 326a, 334a und 336a der bereits beschriebenen ersten Kontakt- und Leiter-Struktur. Es wird eine zweite Reihenschaltung von Thermoelementen 328b, 330b, 332b mit diesen Leiterbahnen und Kontaktflächen gebildet, die bezüglich der Leiterbahn 338 und der Kontaktfläche 316 entgegengesetzt zu der ersten Reihenschaltung von Thermoelementen geschaltet bzw. gepolt ist, da die Anordnung der Arme der Thermoelemente entgegengesetzt zu derselben der ersten Reihenschaltung von Thermoelementen ist. Die ersten und die zweiten Arme der Thermoelemente 328a, 330a, 332a, 328b, 330b, 332b sind an einem jeweiligen spitzen Endpunkt bzw. einer Verbindungsstelle miteinander verbunden. Diese Endpunkte liegen vorzugsweise auf einem gemeinsamen Kreisbogen 340 und bilden einzelne Heizstellen des Heizelements 312.

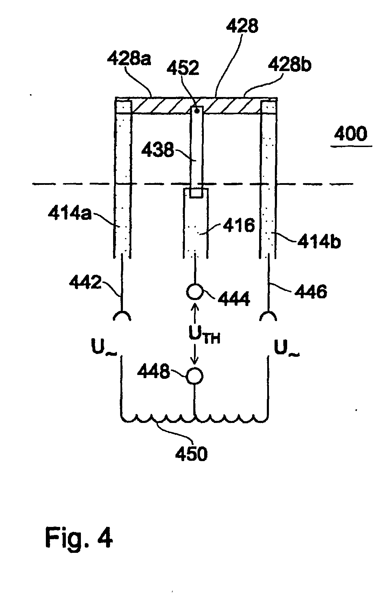

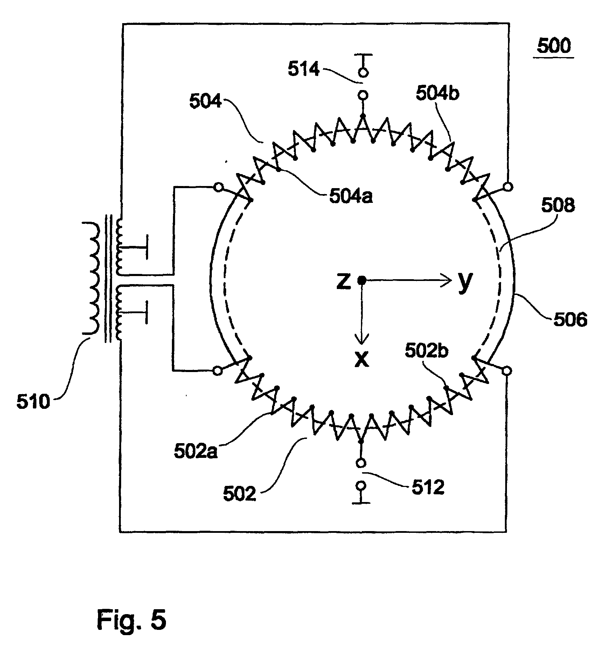

Fig. 4 zeigt eine schematische Darstellung einer Ersatzschaltung 400 für ein Heizelement 312 nach Fig. 3 und die Beschaltung dieses Heizelements. Die Kontaktflächen 414a, 414b und 416 entsprechen den Kontaktflächen 314a, 314b und 316 in Fig. 3. Der linke Teil 428a der Leiterbahn 428 entspricht den ersten Armen der Thermoelemente 328a, 330a, 332a und den zugehörigen Leiterbahnen 322a, 324a, 326a in Fig. 3 und der rechte Teil 428b der Leiterbahn 428 entspricht den ersten Armen der Thermoelemente 328b, 330b, 332b und den zugehörigen Leiterbahnen 322b, 324b, 326b in Fig. 3. Die Leiterbahn 428 besteht wie die obigen Leiterbahnen von Fig. 5 ebenfalls aus einem ersten Material, vorzugsweise Konstantan. Die Leiterbahn 438 in Fig. 4 entspricht den Leiterbahnen 334a, 336a, 338, 334b und 336b in Fig. 3 und besteht ebenfalls aus einem zweiten Material, das sich von dem ersten Material unterscheidet, und vorzugsweise Kupfer ist. Die Klemmen 442, 444 und 446 entsprechen den Klemmen 342, 344 und 346 in Fig. 3. An der Klemme 442 und der Klemme 446 sind gleiche Wechselspannungen zum Heizen der Thermoelemente angelegt. An der Klemme 444 und einer Klemme 448 eines symmetrischen Übertragers 450 wird die Thermospannung $U_{TH}$ abgegriffen. Die Wechselspannungen an den Klemmen 442, 446 werden vorzugsweise durch den symmetrisch geteilten Übertrager 450 geliefert.

Anhand von Fig. 3 und 4 wird nun die Funktion des Heizelements von Fig. 3 beschrieben. An der Berührungsstelle bzw. Verbindungsstelle zwischen zwei unterschiedlichen Metallen bildet sich eine Thermospannung, da die Metalle unterschiedliche Austrittsarbeiten der Elektronen besitzen. In dem Fall von Fig. 4 befinden sich die Kontaktflächen 414a, 414b und 416 auf einer ersten Temperatur, während sich der verbindungsbereich bzw. die Verbindungsstelle 452 zwischen der Leiterbahn 438 und der Leiterbahn 428 auf einer zweiten vorzugsweise höheren Temperatur befindet. Die Verbindungsstelle 452 entspricht den Spitzen der Heizelemente von Fig. 3. Die Thermospannung $U_{TH}$ bestimmt sich nun aus einer Materialkonstante, die den Übergang von dem Material der Leiterbahn 428, dem ersten Material, zu dem Material der Leiterbahn 438, dem zweiten Material, charakterisiert, multipliziert mit der Temperaturdifferenz aus der Temperatur an der Verbindungsstelle 452 und der Temperatur der Kontaktflächen 414a, 416, 414b. Die Materialkonstante beschreibt hier beispielsweise den Übergang zwischen Konstantan und Kupfer bzw. die lineare Abhängigkeit der Thermospannung $U_{TH}$ zwischen zwei Materialien von der Temperaturdifferenz zwischen diesen Materialien.

Da nun die Thermospannung die Temperturdifferenz der Verbindungsstelle 450, d. h. hier der Heizstelle, zu der Umgebung beschreibt, kann selbst bei einer Erwärmung des den Sensor umgebenden Fluids sichergestellt werden, daß durch stärkeres Heizen des Thermoelements oder der Thermoelemente bzw. der Spitze desselben oder den Spitzen derselben eine hohe Temperaturdifferenz der erzeugten Konvektionswalze gegenüber der restlichen Umgebung beibehalten wird und eine hohe Meßempfindlichkeit bestehen bleibt. Dies ist ein Vorteil gegenüber dem Heizelement 108 von Fig. 1, das lediglich auf eine Absoluttemperatur eingestellt werden kann. Die Temperaturdifferenz des Heizeelements gegenüber der Umgebung kann nun folglich mit der Wechselspannung des Übertragers 450 abhängig von der Thermospannung $U_{TH}$ an den Klemmen 444, 448 eingestellt bzw. nachgeregelt werden. Ein weiterer Vorteil der Thermoelemente des Heizelments in Fig. 4 besteht in ihrer geringeren Trägheit im Vergleich zu dem Widerstandsheizer von Fig. 1.

Zurückkehrend zu Fig. 3 bilden die Thermoelemente der Reihenschaltungen von Thermoelementen ein entlang des Kreises 340 sich erstreckendes Heizelement, das an den Berührungsstellen bzw. Verbindungsstellen der ersten und zweiten Arme der Thermoelemente 328a, 330a, 332a, 328b, 330b, 332b heizbar ist, womit eine gleichmäßige Erwärmung über den gesamten Bereich des Heizelements 312 ermöglicht wird. Die Reihenschaltungen der Thermoelemente werden auch Thermopiles genannt.

Es sei bemerkt, daß anstelle der in Fig. 1 gezeigten Sensorelemente 110, 112 ebenfalls Thermopiles verwendet werden können, um über die Thermospannung der Thermoelemente die Temperatur über einen bestimmten Raumbereich zu erfassen, wobei die Thermopiles bevorzugt mit einer Differenzschaltung von zwei oder mehreren Thermopiles realisiert werden.

Fig. 5 zeigt ein zweites Ausführungsbeispiel eines Sensors 500 gemäß der Erfindung, der zwei Heizelemente nach Fig. 3 verwendet. Es sind zwei Heizelemente 502, 504 auf einem Kreis 506 um die Z-Achse bzw. Drehachse um 180° zueinander versetzt angeordnet. Dieser Kreis 506 beschreibt beispielsweise eine Öffnung in einem Substrat, über der die Heizelemente 502, 504 angeordnet sind, oder eine kreisförmige Membran auf der die Heizelemente 502, 504 angeordnet sind, um dort ein Fluid zu heizen, das den Sensor 500 umgibt. Die Heizelemente 502, 504 bestehen jeweils aus zwei gegeneinander geschalteten Reihenschaltungen 502a, 502b bzw. 504a, 504b von Thermoelementen, wie es in Fig. 3 gezeigt ist. Die einzelnen Enden der Thermoelemente sind dabei auf einem Kreis 508 über z. B. der Membran angeordnet, um das Fluid dort auf dieser Kreislinie zu heizen. Durch jedes Heizelement wird wiederum ein Isothermenfeld erzeugt, das sich bei einer Drehbewegung oder Drehbeschleunigung des Sensors 500 um die Drehachse bzw. Z-Achse bzw. bei einer Drehbewegung oder Drehbeschleunigung des Fluids relativ zu dem jeweiligen Heizelement bewegt und durch z. B. ein auf dem Kreis 506 benachbartes Sensorelement, dessen empfindlicher Bereich ebenfalls entlang des Kreises 508 angeordnet ist, erfaßt wird. Es können z. B. zwei um 180° versetzte Sensorelemente, die vorzugsweise Widerstandsheizelemente nach Fig. 1 oder auch Reihenschaltungen von Thermoelementen nach Fig. 3 sind und die eine ähnliche Ausdehnung wie die Heizelemente besitzen, benachbart zu beiden Seiten der Heizelemente 502, 504 angeordnet werden. Dreht sich nun z. B. der Sensor um die Z-Achse, so wird entweder durch den einen oder den anderen eine Widerstandsänderung bzw. eine Temperaturänderung erfaßt, und je nach dem, welches Sensorelement anspricht, auch die Drehrichtung erfaßt. Mit einer derartigen Anordnung kann beispielsweise auch die Drehung des Sensors 500 um die X-Achse erfaßt werden, wobei lediglich immer ein Sensorelement auf dem Kreis 506 links oder rechts der Heizelemente 502, 504 in Fig. 5 gewärmt wird und damit die Richtung, Rate die Beschleunigung der Drehung angeben kann.

In Fig. 5 ist ferner die Verschaltung des Sensors 500 gezeigt. Wie in Fig. 4 gezeigt, sind an die Heizelemente 502, 504 jeweils zwei gleiche Wechselspannungen durch einen symmetrischen Übertrager 510 angelegt. An Klemmen 512, 514 kann wiederum eine jeweilige Thermospannung der einzelnen Heizelemente 502, 504 abgenommen werden, mit der die relative Temperatur des Fluids bzw. der Isothermenfelder genauer der Spitzen der Thermoelemente, gegenüber der Umgebung, z. B. außerhalb des Kreises 506, über die Wechselspannungen gesteuert werden kann. Dies ist bereits oben zu Fig. 3 und 4 beschrieben.

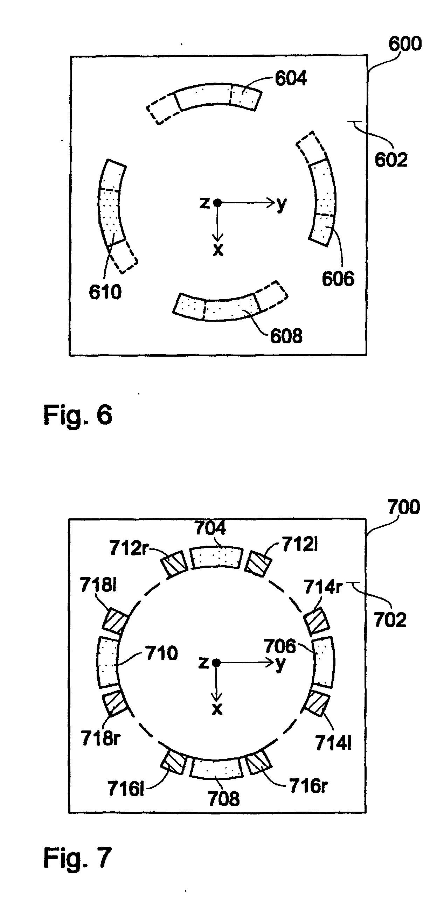

Fig. 6 zeigt ein drittes Ausführungsbeispiel eines Sensors gemäß der Erfindung. Ein Sensor 600 umfaßt vier Heizelemente, die gleichzeitig Sensorelemente sind, bzw. vier Heiz/Sensor-Elemente 604, 606, 608, 610, die auf einem Substrat 602 entlang eines Kreises, z. B. um eine Öffnung in dem Substrat 602 oder um eine kreisförmige Membran über der Öffnung etc., um jeweils 90° zueinander versetzt angeordnet sind. Die Heiz/Sensor-Elemente 604 bis 610 sind vorzugsweise Widerstandsheizer, wie das Heizelement 108 in Fig. 1, oder Thermoelemente oder Reihenschaltungen von Thermoelementen, wie das Heizelement 312 in Fig. 3. Die Heiz/Sensor-Elemente 604-610 erzeugen jeweils Isothermenfelder bzw. Konvektionswalzen durch Stromdurchfluß durch die Heiz- bzw. Meßwiderstände bzw. durch Wechselstrom-Beheizung der Thermoelemente, und bei einer Drehung bzw. Beschleunigung des Sensors bewegt sich jeweils ein Heiz/Sensor-Element relativ zu seiner erzeugten Konvektionswalze, um sich in kühlere Bereiche zu bewegen, wobei es selber dadurch abgekühlt wird. Diese Abkühlung ist durch die Heizwiderstände durch eine Widerstandsänderung und durch die Thermoelemente durch eine Änderung der Thermospannung meßbar. Damit ist eine Drehbewegung und eine Drehbeschleunigung erfaßbar. Fig. 6 zeigt bei den Heiz/Sensor-Elementen 604-610 in gestrichelten Linien die jeweils bei einer Drehung des Sensors 600 nach rechts hinterlassenen Konvektionswalzen (Fig. 11) der Heizelemente 604-610. Werden Heizwiderstände als Heiz/Sensor-Elemente verwendet, so werden dieselben bei einer Abkühlung durch Drehung auf die vorherige Absoluttemperatur nachgeregelt, und werden Thermoelemente Heiz/Sensor-Elemente verwendet, so werden dieselben auf die vorherige Relativtemperatur zu der Umgebung nachgeregelt.

Mit einer Struktur nach Fig. 6 mit Heiz/Sensor-Elementen 604-610 ist nur das Auftreten einer Drehung jedoch nicht die Drehrichtung bestimmbar, da die Sensoren diese in sich nicht erfassen können. Dies ist nur mit Thermoelementen nach Fig. 3 möglich, wenn die Thermospannungen zwischen den Kontaktflächen 342 und 344 bzw. 344 und 346 separat gemessen werden. Drehungen um die X-Achse und die Y-Achse sind jedoch mit dem Sensor 600 erfaßbar, da sich die Konvektionswalzen bei einer Neigung um eine dieser Achsen durch Konvektion, Aufsteigen der Wärme, von den Heiz/Sensor-Elementen wegbewegen bzw. zu denselben von anderen Heiz/Sensorelementen hinbewegen und eine Temperaturänderung nach oben oder unten bewirken. Bei einer Neigung um die X-Achse, bei der beispielsweise das Heiz/Sensor-Element 610 aus der Fig. 6 gedreht wird, bewegt sich die erzeugte Wärme des Heiz/Sensor-Elements 606 von -diesem zu dem Heiz/Sensor-Element 610, wobei das Heiz/Sensor-Element 606 abgekühlt und das Heiz/Sensor-Element 610 zunächst abgekühlt und dann gewärmt wird. Es ist also um die X-Achse und die Y-Achse sowohl eine Bestimmung des Auftretens einer Drehung als auch die Bestimmung der Drehrichtung dieser Drehung möglich.

Fig. 7 zeigt ein viertes Ausführungsbeispiel eines Sensors gemäß der Erfindung. Ähnlich wie bei dem Sensor von Fig. 6 sind bei einem Sensor 700 vier Heizelemente 704, 706, 708 und 710 vorzugsweise entlang einer Kreislinie auf einem Substrat 702 um jeweils 90° zueinander versetzt angeordnet. Jedes Heizelement weist entlang der Kreislinie eine erste und eine zweite Seite auf. Benachbart zu jeder dieser Seiten eines jeweiligen Heizelements 704-710 ist ein jeweiliges Sensorelement 712r bzw. 712l, 714r bzw. 7141, 716r bzw. 716l und 718r bzw. 718l entlang der Kreislinie angeordnet.

Die Heizelemente 704-710 erzeugen wiederum eine Konvektionswalze (Fig. 11) um sich herum, die bei einer Drehung durch die benachbarten Sensorelemente 712-718 erfaßt werden kann. Durch die rechtsseitige und linksseitige Anordnung der Sensorelemente 712-718 kann ferner die Drehrichtung erfaßt werden, da z. B. bei einer Rechtsdrehung des Sensors 700 um die Z-Achse die Sensoren 712r-718r von der jeweiligen Konvektionswalze des jeweiligen Heizelements 704-710 berührt werden und sich erwärmen, und damit die Drehung oder Drehbeschleunigung nach rechts erfaßt werden kann. Gleiches gilt für eine Drehung nach links, bei der die Sensoren 712l-718l von der jeweiligen Konvektionswalze erfaßt werden. Ein Vorteil besteht dabei darin, daß entweder alle Sensoren 712r-718r oder alle Sensoren 712l-718l die Rechts- oder Linksdrehung erfassen, und damit die Empfindlichkeit durch eine höhere Anzahl von Meßsignalen für eine jeweilige Drehrichtung erheblich gesteigert ist. Die Struktur nach Fig. 7 ermöglicht neben der Erfassung einer Drehung um die Z-Achse außerdem die Erfassung von Neigungen bzw. Drehungen um die X- und Y-Achse, was im folgenden näher erläutert ist.

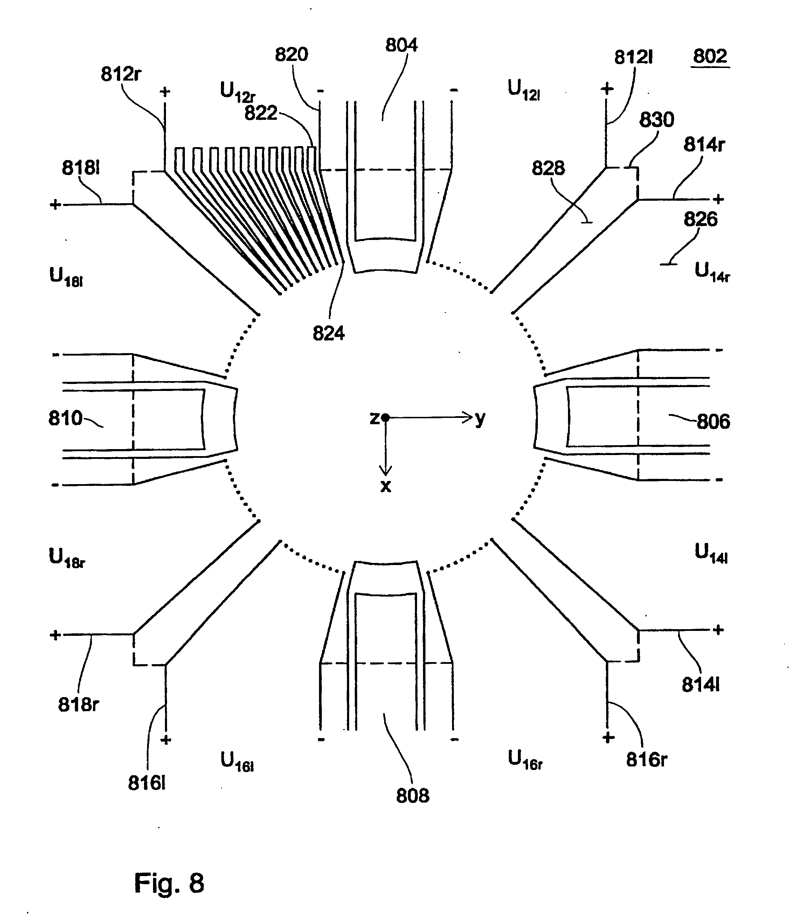

Fig. 8 zeigt eine schematische Darstellung einer Realisierung des vierten Ausführungsbeispiels nach Fig. 7. Wie in Fig. 7 sind auf einem Substrat 802 vier Heizelemente 804, 806, 808, 810 bzw. 804 - 810 vorzugsweise auf einer Kreislinie 90° zueinander versetzt angeordnet. Jedes Heizelement weist in Richtung der Kreislinie jeweils eine erste und eine entgegengesetzte zweite Seite bzw. ein erstes und ein zweites Ende auf, zu denen benachbart jeweilige Sensorelemente 812r bzw. 812l, 814r bzw. 814l, 816r bzw. 816l und 818r bzw. 818l angeordnet sind. Die Heizelemente 804-810 sind vorzugsweise Widerstandsheizer aus NiCrNi und können alternativ Thermoelemente bzw. Reihenschaltungen von Thermoelementen nach Fig. 3 sein. Die Sensorelemente 812-818 sind Reihenschaltungen aus Thermoelementen bzw. Thermopiles, bei denen Thermoelemente, die aus jeweils zwei Armen 820, 822 aus unterschiedlichen metallischen Materialien, wie z. B. Pt, Ni, W, Cu, Fe, NiCr, Si, CuNi, bestehen, verwendet werden, bei denen die Temperatur an den Verbindungsstellen 824 dieser Arme 820, 822 bzw. den Spitzen der Thermoelemente gemessen wird. Die Arme der Thermoelemente eines Sensorelements sind derart gestaltet, daß dieselben gestaffelt nebeneinander entlang der Kreislinie mit unterschiedlichen Längen der Arme angeordnet sind, wie es in Fig. 8 an dem Sensorelement 812r sichtbar ist. Das Substrat 802 ist in zwei Abschnitte, einen äußeren Abschnitt 826 und einen inneren Abschnitt 828, durch eine Linie 830 unterteilt dargestellt. Der äußere Abschnitt 826 ist vorzugsweise ein starres Substrat, das z. B. aus Silizium etc. besteht. Der innere Abschnitt 828 des Substrats 802 kann beispielsweise ebenfalls ein starrer Abschnitt z. B. aus Silizium sein. Auf diesem inneren Abschnitt 828 des Substrats 802 sind die Sensorelemente und die Heizelemente angeordnet. Der innere Abschnitt 828 kann ferner eine Öffnung aufweisen oder eine Öffnung in dem äußeren Abschnitt 826 des Substrats 802 sein, über der die Heizelemente und die Sensorelemente freitragend angeordnet sind, oder der innere Abschnitt 828 kann eine Membran aufweisen oder eine Membran sein, die über einer Öffnung in dem inneren Abschnitt 828 oder über dem inneren Abschnitt 828 angeordnet ist, auf der die Heizelemente und Sensorelemente angebracht sind.

Die Heizelemente 804-810 werden über einen Strom abhängig von dem gemessenen Widerstand des jeweiligen Heizelements bzw. Heizwiderstands auf eine Absoluttemperatur geregelt. Die Sensorelemente 812-818 besitzen jeweils zwei Klemmen (+, -), an denen die jeweilige Thermospannung $U_{12r}$, $U_{12l}$, $U_{14r}$, ... des jeweiligen Sensorelements 812r, 812l, 814r, ... abgegriffen werden kann und womit eine Bestimmung der relativen Temperatur zu der Umgebung ermöglicht wird, und zusätzlich ermöglicht wird, die Temperatur der benachbarten Heizelemente 804-810 nicht nur absolut sondern auch relativ zu steuern.

Die Sensorelemente lassen sich jetzt auf verschiedene Weisen miteinander verschalten, um verschiedene Drehrichtungen zu erfassen. Zur Erfassung einer Drehrichtung bzw. Drehbeschleunigung des Sensors von Fig. 8 um die Z-Achse wird die Differenz Delta($U_z$) aus der Summe von allen Meßsignalen bzw. Thermospannungen $U_{12r}$, $U_{14r}$, $U_{16r}$, $U_{18r}$ der Sensorelemente 812r, 814r, 816r, 818r auf der linken Seite jedes Heizelements 804, 806, 808, 810 bzw. 804-810 und aus der Summe von allen Meßsignalen bzw. Thermospannungen $U_{12l}$, $U_{14l}$, $U_{16l}$, $U_{18l}$ bzw. $U_{12l}$ - $U_{18l}$ der Sensorelemente 812l, 814l, 816l, 818l bzw. 812l-818l auf der rechten Seite jedes Heizelements 804-810 gebildet.

$$Delta(U_z) = (U_{12r} + U_{14r} + U_{16r} + U_{18r}) - (U_{12l} + U_{14l} +$$

$$U_{16l} + U_{18l}) \tag{1}$$

Diese Differenz stellt, wenn sie positiv ist, eine Rechtsdrehung des Sensors 800, und wenn sie negativ ist, eine Linksdrehung des Sensors 800 um die Z-Achse dar. Mit diesem Signal sind sowohl Drehbewegungen als auch Drehbeschleunigungen erfaßbar. Zur Erfassung einer Drehung bzw. Neigung des Sensors von Fig. 8 um die X-Achse wird die Differenz Delta($U_x$) aus der Summe der Meßsignale bzw. der Thermospannungen $U_{14r}$ und $U_{14l}$ der Sensorelemente 814r und 814l und aus der Summe der Meßsignale bzw. der Thermospannungen $U_{18l}$ und $U_{18r}$ der Sensorelemente 818l und 818r gebildet.

$$Delta(U_x) = (U_{14r} + U_{14l}) - (U_{18l} + U_{18r}) \tag{2}$$

Diese Differenz stellt beispielsweise, wenn sie positiv ist, eine positive Drehung um die X-Achse (Rechtsschraube in X-Richtung), und wenn sie negativ ist, eine negative Drehung des Sensors um die X-Achse in Fig. 8 dar. Zur Erfassung einer Drehbewegung bzw. Neigung des Sensors von Fig. 8 um die Y-Achse wird die Differenz Delta($U_y$) aus der Summe der Meßsignale bzw. der Thermospannungen $U_{12r}$ und $U_{12l}$ der Sensorelemente 812r, 812l und aus der Summe der Meßsignale bzw. der Thermospannungen $U_{16l}$ und $U_{16r}$ der Sensorelemente 816l, 816r gebildet.

$$Delta(U_y) = (U_{12r} + U_{12l}) - (U_{16l} + U_{16r}) \tag{3}$$

Diese Differenz stellt beispielsweise, wenn sie positiv ist, eine positive Drehung des Sensors 800 um die Y-Achse, und wenn sie negativ ist, eine negative Drehung des Sensors 800 um die Y-Achse in Fig. 8 dar. Es wird hier jeweils oben davon ausgegangen, daß die Thermospannung durch Erwärmung bei einem Thermoelement als Sensorelement ansteigt. Hier bedeutet dies, daß z. B. bei einer Rechtsdrehung des Sensors um die Y-Achse die Thermoelemente 812r, 812l aus der Ebene der Fig. 8 hinausgedreht werden, wobei die Wärme des Heizelements 808 nach "oben" zu den Thermoelementen 812r, 812l steigt, die Thermoelemente 816l, 816r also etwas abkühlen und deren Thermospannung sinkt, und die Thermoelemente 812r, 812l durch die ansteigende Wärme des Heizelements 808 gewärmt werden, so daß deren Temperatur bzw. Thermospannung steigt. Somit entsteht eine positive Differenzspannung Delta($U_y$), die eine positive Drehung um die Y-Achse anzeigt. Aus den Drehungen um die X-Achse, Y-Achse und Z-Achse lassen sich beispielsweise mit der Struktur von Fig. 8 auch Querbeschleunigungen erfassen, wenn die Ergebnisse der Gleichungen (1), (2) und (3) geeignet verkoppelt werden.

Bei den Strukturen von Fig. 7 bzw. Fig. 8 kann ferner ein Selbsttest des Sensors durchgeführt werden. Eine Möglichkeit besteht darin, beispielsweise jedes Heizelement 804-810 einzeln für sich oder alle Heizelemente zusammen zu heizen bzw. zu erwärmen und die Reaktion der direkt benachbarten oder auch von entfernt liegenden Sensorelementen 812r, 812l, 814r, 814l, ... zu beobachten, wobei ein bestimmtes Nennverhalten bei ordnungsgemäßer Funktion des Sensors als Vergleich dient. Dabei können z. B. die Heizelemente einzeln oder alle mit einem Wechselsignal, vorzugsweise einem Rechtecksignal, belegt werden, und das Temperaturanstiegsverhalten von benachbarten Sensorelementen bei hohem Rechtecksignal (Heizelement Ein) und das Temperaturabfallverhalten bei niedrigem Rechtecksignal (Heizelement Aus) können beobachtet werden, um die Funktion des Sensorelements oder auch daraus des Heizelements oder der Heizelemente zu prüfen. Dies kann z. B. aus dem Ansprechverhalten oder der Ansprechzeit von benachbarten Sensorelementen auf eine Erwärmung oder ein Einschalten eines Heizelements abgeleitet werden.

Eine weitere Möglichkeit eines Selbsttests besteht in einem zusätzlichen Heizelement, das benachbart zu einem jeweiligen Sensorelement angeordnet ist, um das Ansprechverhalten desselben zu testen, indem eine vorbestimmte Heizkurve angelegt wird (Rechtecksignal) und die Reaktion des Sensorelements darauf geprüft wird. Wahlweise kann dieses zusätzliche Heizelement auch mit den vorhandenen benachbarten Heizelementen kombiniert ein- und ausgeschaltet werden, um eine Reaktion des Sensorelements zu prüfen.

Ein Selbsttest wird vorzugsweise bei fehlender Drehbeschleunigung bzw. Drehbewegung des Sensors durchgeführt, um beispielsweise ein vorgegebenes Nennverhalten mit dem Sensorverhalten zu vergleichen. Ist jedoch der Sensor einer Drehbewegung oder Drehbeschleunigung ausgesetzt, so kann ein Selbsttest beispielsweise durch eine der vorhandenen Heizspannung überlagerte Spannung, einen Offset, der eine überlagerte nachprüfbare Reaktion des Sensorelements bewirkt, durchgeführt werden.

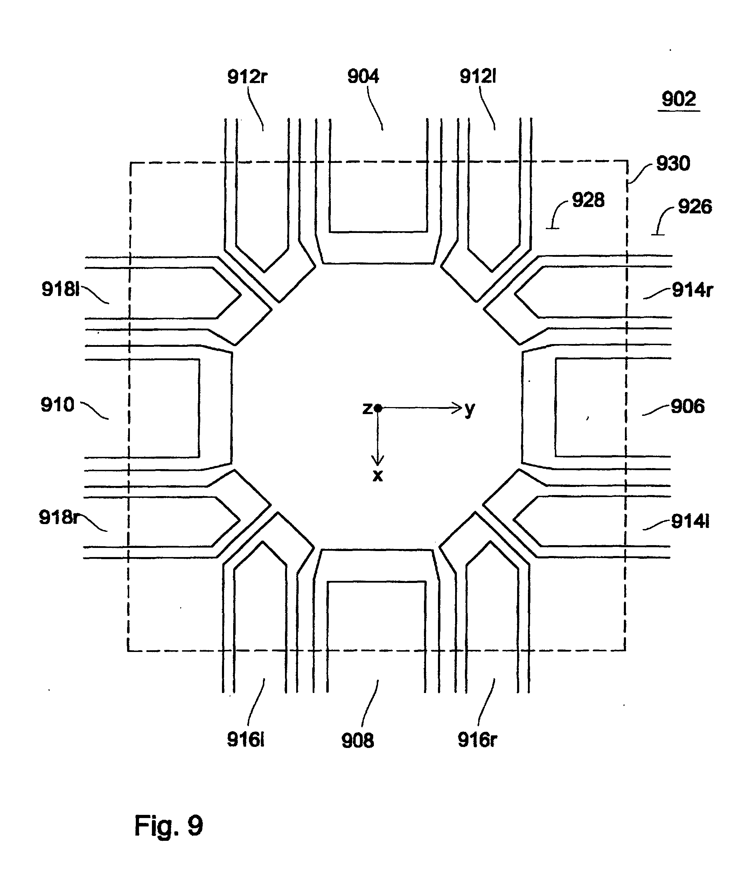

Fig. 9 zeigt eine schematische Darstellung einer alternativen Realisierung des vierten Ausführungsbeispiels nach Fig. 7. Ein Sensor weist ein Substrat 902 auf, das in einem äußeren Abschnitt 926 und in einem inneren Abschnitt 928 durch eine Linie 930 geteilt dargestellt ist. Das Substrat 900 kann wie zu Fig. 8 beschrieben, gestaltet sein. Wie in Fig. 8 sind Heizelemente 904-910 und dazu jeweils benachbarte Sensorelemente 912r bzw. 912l, 914r bzw. 914l, 916r bzw. 916l und 918r bzw. 918l auf dem Substrat 902 angeordnet. Die Heizelemente 904-910 und die Sensorelemente 912-918 sind nun vorzugsweise in einer Polygonform angeordnet, was eine vereinfachte Herstellung der Heizelemente und Sensorelemente gegenüber dem vor allem aufwendigeren kreisförmigen Sensorelementen (Thermoelementen) von Fig. 8 ermöglicht. Im Gegensatz zu Fig. 8 sind die Sensorelemente 912-918 nun Meßwiderstände, die vorzugsweise aus Ni bestehen und die Heizelemente 904-910 sind Meßwiderstände, die vorzugsweise aus NiCrNi (Konstantan) bestehen. Alternativ dazu können die Meßwiderstände der Sensorelemente und Heizelemente ferner aus Polysilizium bestehen.

Bei einer Alternative eines Sensors nach Fig. 9 können die Meßwiderstände der Sensorelemente 912-918 aktiv auf eine zweite niedrigere Temperatur als die Temperatur der Heizelemente 904-910 geregelt werden, wodurch dann durch eine Leistungsregelung der Sensorelemente eine Drehbeschleunigungsmessung erfolgen kann. Das Regeln der Sensorelemente auf eine niedrigere Temperatur erlaubt auch eine höhere Meßempfindlichkeit.

Fig. 10 zeigt eine schematische Schnittdarstellung einer Anordnung der Heizelemente von z. B. Fig. 5. Ein Sensor 1000 weist ein Substrat 1002 auf, in dem eine Öffnung 1004 vorgesehen ist. Über dieser Öffnung 1004 sind z. B. zwei Spitzen 1010, 1012 von Thermoelementen 1006, 1008, wie z. B. der Reihenschaltungen 502, 504 von Thermoelementen in Fig. 5, die beispielsweise eine Kontakt- und Leiter-Struktur wie in Fig. 3 aufweisen, angeordnet bzw. freitragend angeordnet. Die Thermoelemente 1006, 1008 werden, wie in Fig. 5, als Heizelemente verwendet, und es bildet sich folglich um die jeweilige Spitze ein kerzenförmiges Isothermenfeld 1014, 1016 mit einzelnen Isothermen. Die Kerzenform resultiert aus dem Steigen der wärme nach oben in der Richtung der Z-Achse. wie beispielsweise in den Fig. 7, 8 und 9 können benachbart zu den Heizelementen Sensorelemente angeordnet sein, die bei einer Drehung des Sensors bzw. des Fluids um die Z-Achse das von den Heizelementen erzeugte Isothermenfeld berühren und dadurch erwärmt werden.

Fig. 11 zeigt eine schematische Darstellung der Konvektionswalzen der Heizelemente von Fig. 10. Durch die Drehung der einzelnen Heizelemente 1010, 1012 in Fig. 10 um die Z-Achse werden Hüllvolumen durch die Isothermenfelder beschrieben, die üblicherweise als Konvektionswalzen 1102, 1104 bezeichnet werden. Die Konvektionswalzen 1102, 1104 beschreiben eine Kreisform, die durch einen Linie 1106 angedeutet ist. Wird ein Sensor bewegt, bewegen sich nicht nur die Heizelemente und erzeugen die Konvektionswalzen, sondern Sensorelemente treten in die Konvektionswalzen ein und werden erwärmt, was den Meßeffekt der vorliegenden Erfindung bestimmt.

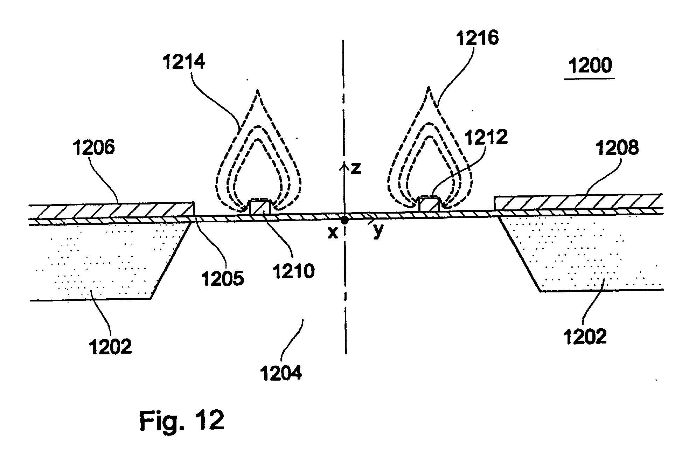

Fig. 12 zeigt eine schematische Schnittdarstellung einer alternativen Anordnung der Heizelementen von beispielsweise Fig. 5. Im Gegensatz zu Fig. 10 sind die Heizelemente nicht freitragend angeordnet. Der Sensor 1200 in Fig. 12 weist ein Substrat 1202 mit einer Öffnung 1204 auf, über der ein Trägerelement, wie vorzugsweise eine dünne Membran 1205, die eine niedrige Wärmekapazität aufweist, angeordnet ist, die die Öffnung 1204 verschließt. Auf dieser Membran sind beispielsweise Thermoelemente 1206 und 1208 angeordnet, die jeweilige heizende Spitzen 1210 und 1212 aufweisen, wie es z. B. zu Fig. 10 beschrieben ist. Diese Thermoelemente erzeugen ebenfalls Isothermenfelder 1214 und 1216, die allerdings nicht stark in die Membran eindringen, so daß sich die Isothermenfelder 1214, 1216 etwas von den Isothermenfeldern 1014, 1016 von Fig. 10 unterscheiden. Bei einer Drehung um die Z-Achse bilden die Heizer ebenfalls Konvektionswalzen, wie sie schematisch in Fig. 11 dargestellt sind.

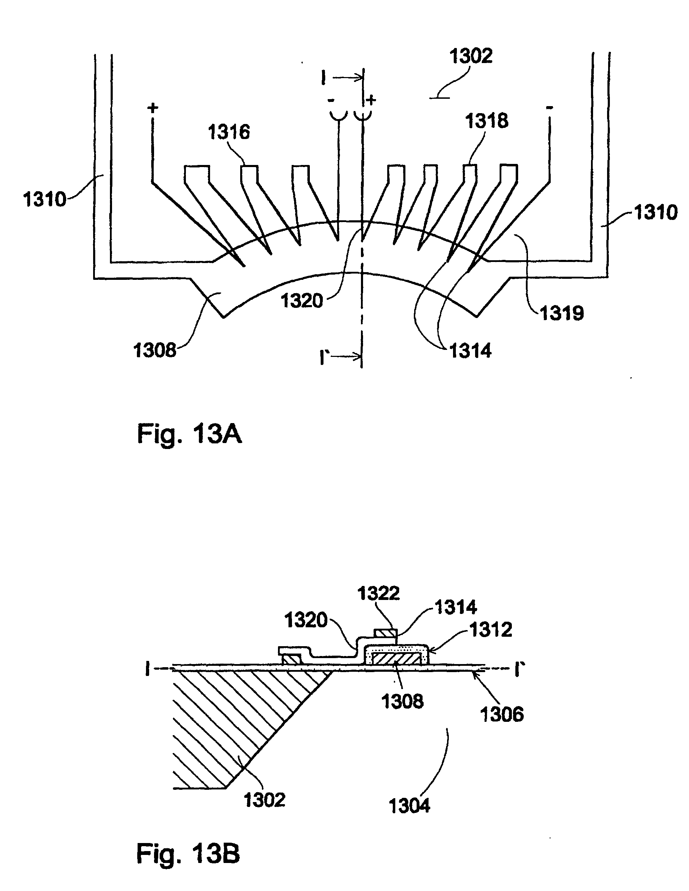

Fig. 13A und 13B zeigen in Draufsicht und Schnittansicht ein fünftes Ausführungsbeispiel eines Sensors gemäß der Erfindung. Im Gegensatz zu den vorher beschriebenen Sensoren zeigen Fig. 13A und 13B einen Sensor, bei dem die Heizelemente und die Sensorelemente übereinander angeordnet sind. Auf einem Substrat 1302 ist eine Membran 1306 über einer Öffnung 1304 in dem Substrat 1302 vorgesehen. Auf diese Membran 1306 ist ein Heizelement 1308, vorzugsweise ein Widerstandsheizer, aufgebracht, der eine kreisförmige Leiterbahn bildet und über leitfähige Streifen 1310 mit Strom versorgt wird. Auf dem Heizelement 1308 ist eine Isolierung 1312 aufgebracht, die das Heizelement 1308 von einzelnen Spitzen 1314 bzw. Verbindungsstellen von zwei Reihenschaltungen 1316, 1318 von Thermoelementen elektrisch isoliert, die ein Sensorelement 1319 bilden. Die einzelnen Arme 1320 und 1322 der Thermoelemente bestehen aus jeweils einem ersten Material und einem zweiten Material, zwischen denen an den Spitzen 1314 eine Thermospannung entsteht. Wird nun das Heizelement 1308 geheizt, so bilden sich Isothermenfelder über dem Heizelement 1308, und wenn eine Drehung des gesamten Sensors um die Z-Achse die Spitzen 1314 des Sensorelements 1318 aus den Isothermenfeldern heraus bewegt, so kühlen sich dieselben ab, wodurch eine Drehung erfaßt werden kann.

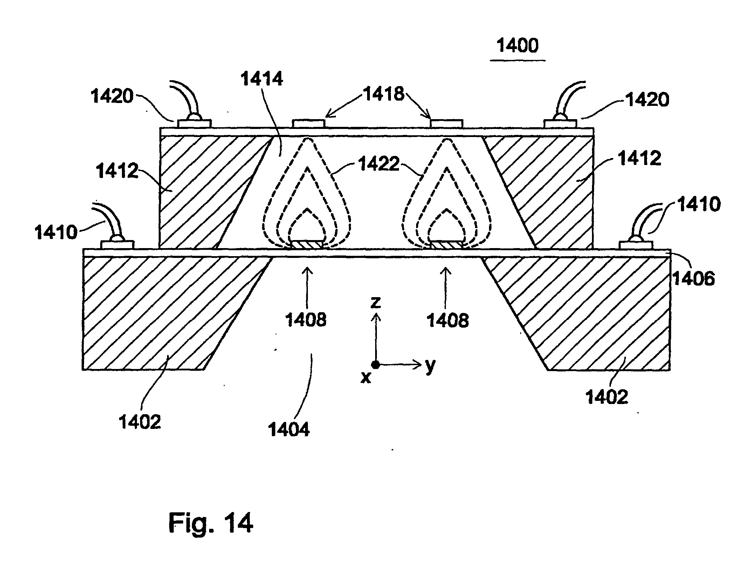

Fig. 14 zeigt ein sechstes Ausführungsbeispiel eines Sensors gemäß der Erfindung. Ein Sensor 1400 weist ein erstes Substrat 1402 mit einer Öffnung 1404, über der vorzugsweise eine Membran 1406 angeordnet ist, auf. Auf der Membran 1406 sind symmetrisch um eine Drehachse bzw. die Z-Achse Heizelemente 1408 nach z. B. Fig. 1, 3 und 5 vorgesehen. Diese Heizelemente 1408 sind z. B. Widerstandsheizer, die über Kontakteinrichtungen 1410 mit Strom versorgt werden. Über dem ersten Substrat 1402 ist zentriert zu der Drehachse ein zweites Substrat 1412 mit einer Öffnung 1414, die mit vorzugsweise einer Membran 1416 verschlossen ist, angeordnet.

Auf dieser Membran 1416 sind symmetrisch zu der Drehachse und über den Heizelementen 1418 Sensor-

**EP 1 111 395 B1**

elemente 1408, wie z. B. dieselben aus Fig. 1 etc., angeordnet, die die Isothermenfelder der Heizelemente 1408 erfassen können. Die Sensorelemente, die beispielsweise Widerstände sein können, werden über Kontakteinrichtungen 1420 ausgelesen bzw. gemessen. Die Heizelemente 1408 erzeugen beim Betrieb kerzenförmige Isothermenfelder 1422, die die Sensorelemente 1418 wärmen. Bei einer Drehbewegung bzw. Drehbeschleunigung des Sensors 1400 um die Drehachse bzw. Z-Achse werden beispielsweise die erwärmten Bereiche relativ zu den Sensorelementen 1418 und den Heizelementen 1408 bewegt, wodurch sich die Sensorelemente 1418 abkühlen und damit z. B. durch eine Widerstandsänderung die Drehbewegung erfassen. Eine derartige Anordnung ist jedoch nicht so empfindlich wie Anordnungen, bei denen die Sensorelemente und die Heizelemente nebeneinander liegen.

Wie erwähnt sind die Sensoren gemäß der Erfindung vorzugsweise in einem abgeschlossenen, fluidgefüllten Gehäuse bzw. einer Kapsel angeordnet. Um eine hohe Empfindlichkeit des Sensors zu ermöglichen, ist das Fluid vorzugsweise ein hochmolekulares bzw. hochdichtes Gas oder eine Flüssigkeit. Die Dichte des Fluids beeinflußt die Isothermenfelder und man erhält einen höchsten Erwärmungseffekt des Fluids bei höchster Dichte des Fluids.

Die vorliegende Erfindung umfaßt Sensoren, die eine einfache Erfassung von Drehbewegungen und Drehbeschleunigungen ermöglichen, einfach aufgebaut und leicht herzustellen sind. Bevorzugte Anwendungen liegen im Bereich der Navigation, z. B. von Automobilen, Wasser- und Luftfahrzeugen, der Erfassung von Bewegungen in Flüssigkeiten bzw. Fluiden in geschlossenen Systemen, der Erfassung der Drehung von Wellen etc.

**Patentansprüche**

1. Sensor zum Erfassen einer Drehbewegung oder einer Drehbeschleunigung um eine Drehachse (z), mit folgenden Merkmalen:

    einem Fluid,
    mindestens einem Heizelement (108; 312; 502, 504; 604-610; 704-710; 804-810; 904-910; 1006, 1008; 1206, 1208; 1308; 1408), das in einer ersten Ebene, die senkrecht zu der Drehachse (z) ist, angeordnet ist, wobei das Heizelement angepaßt ist, um in dem Fluid, das das Heizelement umgibt, einen Konvektionsströmungsbereich zu erzeugen, durch den ein Isothermenfeld festgelegt wird; und
    mindestens einem Sensorelement (110, 112; 604-610; 712r-718r, 712l-718l; 812r-818r, 812l-818l; 912r-918r, 912l-918l; 1319; 1418), wobei das Fluid das Sensorelement umgibt, und wobei das Sensorelement angepaßt ist, um sich bei einer Drehbewegung oder einer Drehbeschleunigung gegenüber dem Isothermenfeld zu bewegen;

    **dadurch gekennzeichnet,**
    **daß** sich das Heizelement (108; 312.; 502, 504; 604-610; 704-710; 804-810; 1006, 1008; 1206, 1208; 1308; 1408) kreisbogenförmig oder in Form eines unterbrochenen Polygonzuges (904-910) um die Drehachse (z) erstreckt.

2. Sensor gemäß Anspruch 1, bei dem das Heizelement (108; 312; 502, 504; 604-610; 704-710; 804-810; 904-910; 1006, 1008; 1206, 1208) und das Sensorelement (110, 112; 604-610; 712r-718r, 712l-718l; 812r-818r, 812l-818l; 912r-918r, 912l-918l) in der ersten Ebene angeordnet sind.

3. Sensor gemäß Anspruch 1 oder 2, bei dem das Heizelement (108; 312; 502, 504; 604-610; 704-710; 804-810; 904-910; 1006, 1008; 1206, 1208; 1308; 1408) und das Sensorelement (110, 112; 604-610; 712r-718r, 712l-718l; 812r-818r, 812l-818l; 912r-918r, 912l-918l; 1319; 1418) auf einem Substrat (102, 104; 302, 304, 308; 602; 702M 802; 902; 1002; 1202; 1302; 1402) angeordnet sind.

4. Sensor gemäß Anspruch 3, bei dem das Heizelement (312; 502, 504; 1006, 1008; 1206, 1208; 1308; 1408) und das Sensorelement (1319;1418) freitragend über einer Öffnung (310; 506; 1004; 1204; 1304; 1404) in dem Substrat (304; 1002; 1202; 1302; 1402) angeordnet sind.

5. Sensor gemäß Anspruch 3 oder 4, bei dem das Substrat (102, 104; 302, 304, 308; 602; 702M 802; 902; 1002; 1202; 1302; 1402) eine Membran aufweist.

6. Sensor gemäß einem der Ansprüche 1 bis 5, bei dem auf einer ersten und einer zweiten Seite des Heizelements (108; 704-710; 804-810; 904-910) in Drehrichtung jeweils ein erstes und ein zweites Sensorelement (110, 112; 712r-718r, 712l-718l; 812r-818r, 812l-818l; 912r-918r, 912l-918l) angeordnet ist.

7. Sensor gemäß Anspruch 6, bei dem das Heizelement (704-710; 804-810; 904-910) ein Widerstand mit temperaturabhängigem Widerstandswert ist.

8. Sensor gemäß einem der Ansprüche 1 bis 7, bei dem das Heizelement (312; 502, 504; 1308) eine erste Reihenschaltung von Thermoelementen (328a-332a; 428a; 502a, 504a; 1316), die ein erstes Ende, das mit einem ersten Außenanschluß (314a; 414a) verbunden ist, und ein zweites Ende aufweist, das mit einem Mittenanschluß (316; 416) verbunden ist, und eine zweite Reihenschaltung von Thermoelementen (328b-332b; 428b; 502b, 504b; 1318) umfaßt, die ein erstes Ende, das mit einem zweiten Außenanschluß (314b, 414b) verbunden ist, und ein zweites Ende aufweist, das mit dem Mittenanschluß verbunden ist, wobei die zweite Reihenschaltung entgegengesetzt zu der ersten Reihenschaltung geschaltet ist.

9. Sensor gemäß Anspruch 8, der ferner folgende Merkmale aufweist:

   - eine Einrichtung (450; 510) zum Anlegen einer symmetrischen Wechselspannung zwischen dem ersten und dem zweiten Außenanschluß (414a, 414b);

   - einer Einrichtung zum Messen einer Gleichspannung (UTH) am Mittenanschluß (416; 512, 514); und

   - einer Einrichtung zum Steuern der Wechselspannung abhängig von der gemessenen Gleichspannung (UTH) .

10. Sensor gemäß einem der Ansprüche 1 bis 9, bei dem vier Heizelemente (604-610; 704-710; 804-810; 904-910) um die Drehachse herum jeweils 90° versetzt zueinander angeordnet sind.

11. Sensor gemäß Anspruch 10, bei dem jeweils zwei Sensorelemente (712r-718r, 712l-718l; 812r-818r, 812l-818l; 912r-918r, 912l-918l) in Drehrichtung auf einer ersten und einer zweiten Seite des Heizelements (704-710; 804-810; 904-910) benachbart zu demselben angeordnet sind.

12. Sensor gemäß einem der Ansprüche 1 bis 11, bei dem das mindestens eine Sensorelement eine Reihenschaltung (812r-818r, 812l-818l) von Thermoelementen und/oder ein Meßwiderstand (712r-718r, 712l-718l; 912r-918r, 912l-918l) ist.

13. Sensor gemäß Ansprüch 11 oder 12, bei dem der Sensor derart angeordnet ist, daß die zu erfaßende Drehbewegung oder die Drehbeschleunigung aus der Differenz zwischen einer Summe der Meßsignale (U12r, U14r U16r, U18r) der einzelnen Sensorelemente (712r-718r; 812r-818r; 912r-918r) auf der jeweiligen ersten Seite eines jeweiligen Heizelements (704-710; 804-810; 904-910) und einer Summe der Meßsignale (U12l, U14l, U16l, U18l) der einzelnen Sensorelemente (712l-718l; 812l-818l; 912l-918l) auf der jeweiligen zweiten Seite eines jeweiligen Heizelements (704-710; 804-810; 904-910) bestimmt wird.

14. Sensor gemäß einem der Ansprüche 11 bis 13, bei dem der Sensor derart angeordnet ist, daß eine Neigung des Sensors um eine erste Neigungsachse (X), die senkrecht zur Drehachse (Z) ist, aus der Differenz zwischen einer Summe der Meßsignale (U14r, U14l) von Sensorelementen (714r, 714l; 814r, 814l; 914r, 914l) auf der ersten und der zweiten Seite eines ersten Heizelements (706; 806; 906) und einer Summe der Meßsignale (U18r, U18l) von Sensorelementen (718r, 718l; 818r, 818l; 918r, 918l) auf der ersten und der zweiten Seite eines zweiten Heizelements (710; 810; 910), das um 180° zu dem ersten Heizelement (706; 806; 906) versetzt ist, bestimmt wird.

15. Sensor gemäß Anspruch 14, bei dem der Sensor derart angeordnet ist, daß eine Neigung des Sensors um eine zweite Neigungsachse (Y), die senkrecht zu der Drehachse (z) und der ersten Neigungsachse (X) ist, aus der Differenz zwischen einer Summe der Meßsignale (U12r, U12l) von Sensorelementen (712r, 712l; 812r, 812l; 912r, 912l) auf der ersten und der zweiten Seite eines dritten Heizelements (704;.804; 904) und einer Summe der Meßsignale (U16r, U16l) von Sensorelementen (716r, 716l; 816r, 816l; 916r, 916l) auf der ersten und der zweiten Seite eines vierten Heizelements (708; 808; 908), das um 180° zu dem dritten Heizelement (704; 804; 904) versetzt ist, bestimmt wird.

16. Sensor gemäß einem der Ansprüche 6 bis 15, bei dem das erste und das zweite Sensorelement (110, 112) viertelkreisförmige Leiterbahnen sind.

17. Sensor gemäß Anspruch 1, bei dem das Sensorelement (1319; 1418) in einer zweiten Ebene, die parallel zu der ersten Ebene ist, über dem Heizelement (1308; 1408) angeordnet ist.

**18.** Sensor gemäß einem der Ansprüche 1 bis 17, bei dem der Sensor angeordnet ist, um die Drehbewegung oder die Drehbeschleunigung des Sensors zu erfassen, oder angeordnet ist, um die Drehbewegung oder die Drehbeschleunigung des Fluids zu erfassen.

**Claims**

**1.** A sensor for detecting a rotational movement or an angular acceleration about an axis of rotation (z), comprising:

a fluid

at least one heating element (108; 312; 502, 504; 604-610; 704-710, 804-810; 904-910; 1006; 1008; 1206; 1208; 1308; 1408) which is arranged in a first plane extending at right angles to said axis of rotation (z), the heating element being adapted to produce in the fluid surrounding the heating element a convection flow zone through which an isothermal field is defined; and

at least one sensor element (110, 112; 604-610; 712r-718r, 712l-718l; 812r-818r; 812l-818l; 912r-918r, 912l-918l; 1319; 1418), the fluid surrounding the sensor element, and the sensor element being adapted to move relative to the isothermal field when a rotational movement or an angular acceleration takes place;

**characterized in that**
the heating element (108; 312; 502, 504; 604-610; 704-710, 804-810; 1006; 1008; 1206; 1208; 1308; 1408) extends in the form of a circular arc or in form of an interrupted polygonal progression (904-910) around the axis of rotation (z).

**2.** A sensor according to claim 1, wherein the heating element (108; 312; 502, 504; 604-610; 704-710, 804-810; 904-910; 1006; 1008; 1206; 1208) as well as the sensor element (110, 112; 604-610; 712r-718r, 712l-718l; 812r-818r; 812l-818l; 912r-918r, 912l-918l) are arranged in the first plane.

**3.** A sensor according to claim 1 or 2, wherein the heating element (108; 312; 502, 504; 604-610; 704-710, 804-810; 904-910; 1006; 1008; 1206; 1208; 1308; 1408) and the sensor element (110; 112; 604-610; 712r-718r, 712l-718l; 812r-818r; 812l-818l; 912r-918r, 912l-918l; 1319; 1418) are arranged on a substrate (102, 104; 302, 304, 308; 602; 702; 802; 902; 1002; 1202; 1302; 1402).

**4.** A sensor according to claim 3, wherein the heating element (312; 502, 504; 1006; 1008; 1206; 1208; 1308; 1408) and the sensor element (1319; 1418) are arranged in a cantilevered mode of arrangement above an opening (310; 506; 1004; 1204; 1304; 1404) in the substrate (304; 1002; 1202; 1302; 1402).

**5.** A sensor according to claim 3 or 4, wherein the substrate (102, 104; 302, 304, 308; 602; 702; 802; 902; 1002; 1202; 1302; 1402) is provided with a diaphragm.

**6.** A sensor according to one of the claims 1 to 5, wherein first and second sensor elements (110, 112; 712r-718r, 712l-718l; 812r-818r, 812l-818l; 912r-918r, 912l-918l) are respectively arranged on a first and on a second side of the heating element (108; 704-710; 804-810; 904-910)), when seen in the direction of rotation.

**7.** A sensor according to claim 6, wherein the heating element (704-710; 804-810; 904-910) is a resistor with a temperature-dependent resistance value.

**8.** A sensor according to one of the claims 1 to 7, wherein the heating element (312; 502, 504; 1308) comprises a first series connection of thermoelements (328a-332a; 428a; 502aa; 504a; 1316) having a first end, which is connected to a first external connection (314a; 414a), and a second end, which is connected to a centre connection (316; 416), and a second series connection of thermoelements (328b-332b; 428b; 502b, 504b; 1318) having a first end, which is connected to a second external connection (314b; 414b), and a second end, which is connected to the centre connection, the second series connection being switched opposite to the first series connection.

**9.** A sensor according to claim 8 comprising in addition the following features:

means (450, 510) for applying a symmetric alternating voltage between the first and second external connec-

**EP 1 111 395 B1**

tions (414a, 414b);

means for measuring a direct voltage (UTH) at the centre connection (416; 512, 514); and

means for controlling the alternating voltage in dependence upon the measured direct voltage (UTH).

10. A sensor according to one of the claims 1 to 9, wherein four heating elements (604-610; 704-710; 804-810; 904-910) are arranged around the axis of rotation such that they are displaced by 90° relative to one another.

11. A sensor according to claim 10, wherein two respective sensor elements (712r-718r, 712l-718l; 812r-818r, 812l-818l; 912r-918r, 912l-918l) are arranged adjacent to the heating element (704-710; 804-810; 904-910) on a first and on a second side of the heating element, when seen in the direction of rotation.

12. A sensor according to one of the claims 1 to 11, wherein the at least one sensor element consists of a series connection (812r-818r, 812l-818l) of thermoelements and/or of a measuring resistor (712r-718r, 712l-718l; 912r-918r, 912l-918l).

13. A sensor according to claim 11 or 12, wherein the sensor is arranged in such a way that the rotational movement or angular acceleration to be detected is determined from the difference between a sum of the measuring signals (U12r, U14r, U16r, U18r) of the individual sensor elements (712r-718r; 812r-818r; 912r-918r) on the first side of a respective heating element (704-710; 804-810; 904-910) and a sum of the measuring signals (U12l, U14l, U16l, U18l) of the individual sensor elements (712l-718l; 812l-818l; 912l-918l) on the second side of a respective heating element (704-710; 804-810; 904-910).

14. A sensor according to one of the claims 11 to 13, wherein the sensor is arranged such that a tilt of the sensor about a first tilt axis (X), which extends at right angles to the axis of rotation (Z), is determined from the difference between a sum of the measuring signals (U14r, U14l) of sensor elements (714r, 714l; 814r, 814l; 914r, 914l) on the first and on the second side of a first heating element (706; 806; 906) and a sum of the measuring signals (U18r, U18l) of sensor elements (718r, 718l; 818r, 818l; 918r, 918l) on the first and on the second side of a second heating element (710; 810; 910), the second heating element (710; 810; 910) being displaced by 180° relative to the first heating element (706; 806; 906).

15. A sensor according to claim 14, wherein the sensor is arranged such that a tilt of the sensor about a second tilt axis (Y), which extends at right angles to the axis of rotation (Z) and the first tilt axis (X), is determined from the difference between a sum of the measuring signals (U12r, U12l) of sensor elements (712r, 712l; 812r, 812l; 912r, 912l) on the first and on the second side of a third heating element (704; 804; 904) and a sum of the measuring signals (U16r, U16l of sensor elements (716r, 716l; 816r, 816l; 916r, 916l) on the first and on the second side of a fourth heating element (708; 808; 908), the fourth heating element (708; 808; 908) being displaced by 180° relative to the third heating element (704; 804; 904).

16. A sensor according to one of the preceding claims 6 to 15, wherein the first and second sensor elements (110, 112) are conducting tracks having the shape of a quarter of a circle.

17. A sensor according to claim 1, wherein the sensor element (1319; 1418) is arranged in a second plane, which is parallel to the first plane, above the heating element (1308; 1408).

18. A sensor according to one of the claims 1 to 17, wherein the sensor is either arranged such that it is adapted to detect the rotational movement or the angular acceleration of the sensor, or arranged such that it is adapted to detect the rotational movement or the angular acceleration of the fluid.

## Revendications

1. Capteur pour la détection d'un mouvement de rotation ou d'une accélération de rotation autour d'un axe de rotation (z), aux caractéristiques suivantes :

   un fluide ;
   au moins un élément chauffant (108 ; 312 ; 502, 504 ; 604 à 610 ; 704 à 710 ; 804 à 810; 904 à 910; 1006, 1008; 1206, 1208; 1308; 1408) disposé dans un premier plan perpendiculaire à l'axe de rotation, l'élément chauffant étant adapté pour générer, dans du fluide entourant l'élément chauffant, une zone de courant de convection par laquelle est établi un champ isothermique ; et

au moins un élément capteur (110, 112 ; 604 à 610 ; 712r à 718r, 712l à 718l ; 812r à 818r, 812l à 818l ; 912r à 918r, 912l à 918l ; 1319; 1418), le fluide entourant l'élément capteur et l'élément capteur étant adapté pour se déplacer, lors d'un mouvement de rotation ou d'une accélération de rotation, par rapport au champ isothermique ;

**caractérisé en ce**

**que** l'élément chauffant (108 ; 312 ; 502, 504 ; 604 à 610 ; 704 à 710 ; 804 à 810 ; 1006, 1008 ; 1206, 1208 ; 1308 ; 1408) s'étend en arc de cercle ou sous forme d'un trait polygonal interrompu (904 à 910) autour de l'axe de rotation (z).

2. Capteur selon la revendication 1, dans lequel l'élément chauffant (108 ; 312 ; 502, 504 ; 604 à 610 ; 704 à 710 ; 804 à 810 ; 904 à 910 ; 1006, 1008 ; 1206, 1208) et l'élément capteur (110, 112 ; 604 à 610 ; 712r à 718r, 712l à 718l ; 812r à 818r, 812l à 818l ; 912r à 918r, 912l à 918l) sont disposés dans le premier plan.

3. Capteur selon la revendication 1 ou 2, dans lequel l'élément chauffant (108 ; 312 ; 502, 504 ; 604 à 610 ; 704 à 710 ; 804 à 810 ; 904 à 910 ; 1006, 1008 ; 1206, 1208 ; 1308 ; 1408) et l'élément capteur (110, 112 ; 604 à 610 ; 712r à 718r, 712l à 718l ; 812r à 818r, 812l à 818l ; 912r à 918r, 912l à 918l ; 1319; 1418) sont disposés sur un substrat (102, 104 ; 302, 304, 308 ; 602 ; 702M 802 ; 902 ; 1002 ; 1202 ; 1302 ; 1402).

4. Capteur selon la revendication 3, dans lequel l'élément chauffant (312 ; 502, 504 ; 1006, 1008 ; 1206, 1208 ; 1308 ; 1408) et l'élément capteur (1319 ; 1418) sont disposés de manière librement portante au-dessus d'une ouverture (310 ; 506 ; 1004 ; 1204 ; 1304 ; 1404) dans le substrat (304; 1002 ; 1202 ; 1302 ; 1402).

5. Capteur selon la revendication 3 ou 4, dans lequel le substrat (102, 104 ; 302, 304, 308 ; 602 ; 702M 802 ; 902 ; 1002 ; 1202 ; 1302 ; 1402) présente une membrane.

6. Capteur selon l'une des revendications 1 à 5, dans lequel est disposé, sur chacun d'un premier côté et d'un second côté de l'élément chauffant (108 ; 704 à 710, 804 à 810 ; 904 à 910 ), dans le sens de rotation, un premier et un second élément capteur (110, 112 ; 712r à 718r, 712l à 718l ; 812r à 818r, 812l à 818l ; 912r à 918r, 912l à 918l).

7. Capteur selon la revendication 6, dans lequel l'élément chauffant (704 à 710 ; 804 à 810 ; 904 à 910 ) est une résistance à valeur de résistance en fonction de la température.

8. Capteur selon l'une des revendications 1 à 7, dans lequel l'élément chauffant (312 ; 502, 504 ; 1308 ) comporte une première connexion en série de thermocouples (328a à 332a ; 428a; 502a, 504a; 1316) présentant une première extrémité raccordée à une première connexion extérieure et une seconde extrémité raccordée à une connexion centrale (316 ; 416) et une seconde connexion en série de thermocouples (328b à 332b ; 428b ; 502b, 504b ; 1318) présentant une première extrémité raccordée à une seconde connexion extérieure (314b, 414b) et une seconde extrémité raccordée à la connexion centrale, la seconde connexion en série étant commutée de manière opposée à la première connexion en série.

9. Capteur selon la revendication 8, présentant, par ailleurs les caractéristiques suivantes :

- un dispositif (450 ; 510) destiné à appliquer une tension alternative symétrique entre la première et la seconde connexion extérieure (414a, 414b) ;
- un dispositif destiné à mesurer une tension continue (UTH) à la connexion centrale (416; 512, 514);et
- un dispositif destiné à réguler la tension continue en fonction de la tension continue (UTH) mesurée.

10. Capteur selon l'une des revendications 1 à 9, dans lequel quatre éléments chauffants (604 à 610 ; 704 à 710, 804 à 810 ; 904 à 910), décalés, chacun, de 90° entre eux, sont disposés autour de l'axe de rotation.

11. Capteur selon la revendication 10, dans lequel deux éléments capteurs (712r à 718r, 712l à 718l; 812r à 818r, 812l à 818l; 912r à 918r, 912l à 918l) sont disposés, dans le sens de rotation, sur chacun d'un premier côté et d'un second côté de l'élément chauffant (704 à 710, 804 à 810 ; 904 à 910), à proximité de ce dernier.

**12.** Capteur selon l'une des revendications 1 à 11, dans lequel l'au moins un élément capteur est une connexion en série (812r à 818r, 812l à 818l ) de thermocouples et/ou une résistance de mesure (712r à 718r, 712l à 718l ; 912r à 918r, 912l à 918l).

**13.** Capteur selon la revendication 11 ou 12, dans lequel le capteur est disposé de telle sorte que le mouvement de rotation ou l'accélération de rotation à détecter est déterminé à partir de la différence entre une somme des signaux de mesure (U12r, U14r, U16r, U18r) des différents éléments capteurs (712r à 718r; 812r à 818r; 912r à 918r) sur le premier côté respectif d'un élément chauffant respectif (704 à 710 ; 804 à 810 ; 904 à 910) et une somme des signaux de mesure (U12l, U14l, U16l, U18l) des différents éléments capteurs (7121 à 7182; 8121 à 8182; 9121 à 9182) sur le second côté respectif d'un élément chauffant respectif (704 à 710, 804 à 810 ; 904 à 910).

**14.** Capteur selon l'une des revendications 11 à 13, dans lequel le capteur est disposé de telle sorte qu'une inclinaison du capteur autour d'un premier axe d'inclinaison (X) perpendiculaire à l'axe de rotation (Z) est déterminée à partir de la différence entre une somme des signaux de mesure (U14r, U14l) d'éléments capteurs (714r, 714l ; 814r, 814l ; 914r, 914l) sur le premier et le second côté d'un premier élément chauffant (706 ; 806 ; 906) et une somme des signaux de mesure (U18r, U18l) d'éléments capteurs (718r, 718l ; 818r, 818l ; 918r, 918l) sur le premier et le second côté d'un second élément chauffant (710 ; 810 ; 910) décalé de 180° par rapport au premier élément chauffant (706 ; 806 ; 906).

**15.** Capteur selon la revendication 14, dans lequel le capteur est disposé de telle sorte qu'une inclinaison du capteur autour d'un second axe d'inclinaison (Y) perpendiculaire à l'axe de rotation (Z) et au premier axe d'inclinaison (X) est déterminée à partir de la différence entre une somme des signaux de mesure (U12r, U12l) d'éléments capteurs (712r, 712l ; 812r, 812l ; 912r, 912l) sur le premier et le second côté d'un troisième élément chauffant (704 ; 804 ; 904) et une somme des signaux de mesure (U16r, U161) d'éléments capteurs (716r, 716l ; 816r, 816l ; 916r, 916l) sur le premier et le second côté d'un quatrième élément chauffant (708 ; 808 ; 908) décalé de 180° par rapport au troisième élément chauffant (704 ; 804 ; 904).

**16.** Capteur selon l'une des revendications 6 à 15, dans lequel le premier et le second élément capteur (110, 112) sont des chemins de conducteurs en forme de quart de cercle.

**17.** Capteur selon la revendication 1, dans lequel l'élément capteur (1319 ; 1418) est disposé, au-dessus de l'élément chauffant (1308 ; 1408), dans un second plan parallèle au premier plan.

**18.** Capteur selon l'une des revendications 1 à 17, dans lequel le capteur est disposé de manière à détecter le mouvement de rotation ou l'accélération de rotation du capteur ou est disposé de manière à détecter le mouvement de rotation ou l'accélération de rotation du fluide.

$U_{CONST}$

134   138   126

122

102

124

136   $U_{DIFF}$

140

130

106

132   104

110

112

128

142

z  y

x

108

116   120

114   118

100

$U_{HEIZ}$

Fig. 1

Fig. 2

**Fig. 3**

Fig. 4

Fig. 5

600

604

602

z →y

x

610

606

608

**Fig. 6**

700

704

712r

712l

718l

714r

702

710

706

z →y

x

718r

714l

716l

716r

708

**Fig. 7**

Fig. 8

Fig. 9

1000

1016

1010

1006

1012

1008

z

x

y

1014

1002

1004

1002

**Fig. 10**

1102

z

y

x

1104

1106

**Fig. 11**

Fig. 12

Fig. 13A

Fig. 13B

Fig. 14